# EUROPEAN PATENT APPLICATION

(11) **EP 4 694 251 A1**
(43) Date of publication of application: **11.02.2026**
(21) Application number: 24924458.3
(22) Date of filing: 29.04.2024
(51) Int. Cl.: H04W 12/033

(54) **PRIVACY CHECK METHOD, APPARATUS, DEVICE, MEDIUM, AND PROGRAM PRODUCT**

(30) Priority: 18.02.2024 WO PCT/CN2024/077474
(71) Applicant: GUANGDONG OPPO MOBILE TELECOMMUNICATIONS CORP., LTD., Dongguan, Guangdong 523860 (CN)
(72) Inventor: XIONG, Lihui, Dongguan, Guangdong 523860 (CN); WANG, Yaxin, Dongguan, Guangdong 523860 (CN)
(74) Representative: Novagraaf Technologies
(86) International application number: PCT/CN2024/090678
(87) International publication number: WO 2025/171692

(57) **Abstract**

A privacy check method, an apparatus, a device, a medium, and a program product, which relate to the field of sidelink (SL) positioning or the field of ranging or the field of sensing. The method comprises: on the basis of identification information of an SL positioning client UE and privacy check information of a first UE, obtaining a privacy check result of the first UE, wherein the privacy check result is used for indicating whether the SL positioning client UE has permission to acquire privacy data of the first UE. The method realizes the privacy check of a first UE, and a privacy check process is executed by the first UE, such that the exposure of privacy data of the first UE can be avoided, thereby improving the security of the privacy check process.

## Description

The present disclosure claims priority to Chinese Patent Application No. PCT/CN2024/077474, filed on February 18, 2024 and entitled "METHOD FOR PRIVACY VERIFICATION, APPARATUS, DEVICE, MEDIUM, AND PROGRAM PRODUCT," the disclosure of which is herein incorporated by reference in its entirety.

### TECHNICAL FIELD

The present disclosure relates to the field of sidelink (SL) positioning, ranging, or sensing, and in particular, relates to a method and an apparatus for privacy verification, and a device, a medium, and a program product thereof.

### RELATED ART

In ranging/SL positioning services, a method has been proposed to provide a ranging or positioning result to an SL positioning client user equipment (UE). However, the ranging or positioning result is privacy data of a UE. Therefore, prior to exposure, it is necessary to determine whether the UE wants to expose such privacy data. A method for privacy verification in this scenario has not yet been determined in some practices.

### SUMMARY

Embodiments of the present disclosure provide a method and an apparatus for verifying privacy, and a device, a medium, and a program product thereof. The technical solutions are as follows.

According to some embodiments of the present disclosure, a method for privacy verification is provided. The method is performed by a first UE, and includes:
acquiring a privacy verification result of the first UE based on identification information of an SL positioning client UE and privacy verification information of the first UE,
wherein the privacy verification result is used to indicate whether the SL positioning client UE is authorized to acquire privacy data of the first UE.

According to some embodiments of the present disclosure, a method for privacy verification is provided. The method is performed by a firstUE, and includes:
transmitting identification information of an SL positioning client UE to a first UE,
wherein the first UE is configured to acquire a privacy verification result of the first UE based on the identification information of the SL positioning client UE and privacy verification information of the first UE, wherein the privacy verification result is used to indicate whether the SL positioning client UE is authorized to acquire privacy data of the first UE.

According to some embodiments of the present disclosure, a method for privacy verification is provided. The method is performed by a first UE, and includes:
acquiring a privacy verification result of the first UE based on identification information of an SL positioning server UE and privacy verification information of the first UE,
wherein the privacy verification result is used to indicate whether the SL positioning server UE is authorized to acquire privacy data of the first UE.

According to some embodiments of the present disclosure, a method for privacy verification is provided. The method is performed by a second UE, and includes:
transmitting identification information of an SL positioning server UE to a first UE,
wherein the first UE is configured to acquire a privacy verification result of the first UE based on the identification information of the SL positioning server UE and privacy verification information of the first UE, wherein the privacy verification result is used to indicate whether the SL positioning server UE is authorized to acquire privacy data of the first UE.

According to some embodiments of the present disclosure, a first apparatus is provided. The first apparatus includes:
a first verifying module, configured to acquire a privacy verification result of a first UE based on identification information of an SL positioning client UE and privacy verification information of the first UE, wherein the privacy verification result is used to indicate whether the SL positioning client UE is authorized to acquire privacy data of the first UE.

According to some embodiments of the present disclosure, a second apparatus is provided. The second apparatus includes:
a second transmitting module, configured to transmit identification information of an SL positioning client UE to a first UE,
wherein the first UE is configured to acquire a privacy verification result of the first UE based on the identification information of the SL positioning client UE and privacy verification information of the first UE, wherein the privacy verification result is used to indicate whether the SL positioning client UE is authorized to acquire privacy data of the first UE.

According to some embodiments of the present disclosure, a third apparatus is provided. The third apparatus includes:
a second verifying module, configured to acquire a privacy verification result of a first UE based on identification information of an SL positioning server UE and privacy verification information of the first UE, wherein the privacy verification result is used to indicate whether the SL positioning server UE is authorized to acquire privacy data of the first UE.

According to some embodiments of the present disclosure, a fourth apparatus is provided. The fourth apparatus includes:
a fourth transmitting module, configured to transmit identification information of an SL positioning server UE to a first UE,
wherein the first UE is configured to acquire a privacy verification result of the first UE based on the identification information of the SL positioning server UE and privacy verification information of the first UE, wherein the privacy verification result is used to indicate whether the SL positioning server UE is authorized to acquire privacy data of the first UE.

According to some embodiments of the present disclosure, a terminal device is provided. The terminal device includes:
a processor; a transceiver connected to the processor; and a memory configured to store one or more executable instructions of the processor,
wherein the processor is configured to load and execute the one or more executable instructions to perform the method for privacy verification described above.

According to some embodiments of the present disclosure, a computer-readable storage medium is provided. The computer-readable storage medium stores: one or more programs, wherein the one or more programs, when loaded and run by a processor, cause the processor to perform the sensing method or the method for privacy verification described above.

According to some embodiments of the present disclosure, a chip is provided. The chip includes: programmable logic circuitry or one or more programs, wherein the chip, when running, is configured to perform the sensing method or the method for privacy verification described above.

According to some embodiments of the present disclosure, a computer program product is provided. The computer program product includes: one or more computer instructions stored in a computer-readable storage medium, wherein the one or more computer instructions, when read by a processor of a computer device from the computer-readable storage medium and executed by the processor, cause the computer device to perform the sensing method or the method for privacy verification described above.

The technical solutions according to the embodiments of the present disclosure include at least the following beneficial effects. The method for privacy verification performed by the first UE is illustrated. That is, the privacy verification result of the first UE is acquired by performing the privacy verification based on the identification information of the client UE and the privacy verification information of the first UE. In the method, the first UE performs the determination based on its own privacy verification information, such that the privacy verification is performed, exposure of the privacy verification information of the first UE is avoided, and the security of the privacy verification process is improved.

### BRIEF DESCRIPTION OF DRAWINGS

To describe the technical solutions according to the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a schematic diagram of a network architecture according to some exemplary embodiments of the present disclosure;
FIG. 2 is a schematic diagram of SL communication according to some exemplary embodiments of the present disclosure;
FIG. 3 is a schematic diagram of SL communication according to some exemplary embodiments of the present disclosure;
FIG. 4 is a schematic diagram of SL communication according to some exemplary embodiments of the present disclosure;
FIG. 5 is a schematic diagram of an SL positioning procedure according to some exemplary embodiments of the present disclosure;
FIG. 6 is a schematic diagram of a ranging/SL positioning service process according to some exemplary embodiments of the present disclosure;
FIG. 7 is a flowchart of a method for privacy verification according to some exemplary embodiments of the present disclosure;
FIG. 8 is a flowchart of a method for privacy verification according to some exemplary embodiments of the present disclosure;
FIG. 9 is an overall flowchart of a method for privacy verification according to some exemplary embodiments of the present disclosure;
FIG. 10 is an overall flowchart of a method for privacy verification according to some exemplary embodiments of the present disclosure;
FIG. 11 is a flowchart of a method for privacy verification according to some exemplary embodiments of the present disclosure;
FIG. 12 is a flowchart of a method for privacy verification according to some exemplary embodiments of the present disclosure;
FIG. 13 is a structural block diagram of a first apparatus according to some exemplary embodiments of the present disclosure;
FIG. 14 is a structural block diagram of a second apparatus according to some exemplary embodiments of the present disclosure;
FIG. 15 is a structural block diagram of a third apparatus according to some exemplary embodiments of the present disclosure;
FIG. 16 is a structural block diagram of a fourth apparatus according to some exemplary embodiments of the present disclosure; and
FIG. 17 is a schematic structural diagram of a terminal device according to some exemplary embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings. Reference may be made in detail to the exemplary embodiments, examples of which are illustrated in the accompanying drawings. When the following description refers to the accompanying drawings, the same numbers in different accompanying drawings represent the same or similar elements unless otherwise indicated. The embodiments described in the following exemplary embodiments do not represent all embodiments consistent with the present disclosure. Rather, they are merely examples of apparatus and methods consistent with some aspects of the present disclosure, as detailed in the appended claims.

The terms used in the present disclosure are for the purpose of describing particular embodiments only and are not intended to limit the present disclosure. As used in the present disclosure and the appended claims, the singular forms "a," "an," and "the" are intended to include the plural forms as well, unless the context clearly indicates otherwise. It should be understood that although the terms "first," "second," "third," and the like may be used herein to describe various pieces of information, and such information should not be limited to these terms. These terms are only used to distinguish one type of information from another. For example, first information may also be referred to as second information, and similarly, second information is also referred to as first information, without departing from the scope of the present disclosure. The word "if," as used herein, may be interpreted as "in a case where," " in a case when," or "in response to determining that," depending on the context. In the description of the embodiments of the present disclosure, the term "correspond" indicates a direct or indirect corresponding relationship between two items, or indicates an association relationship between the two. It may also indicate relationships such as indicating and being indicated, and configuring and being configured.

The technical solutions according to some embodiments of the present disclosure are applicable to various communication systems, e.g., a long term evolution (LTE) system, an advanced long term evolution (LTE-A) system, a new radio (NR) system, an evolved system of the NR system, an LTE-based access to unlicensed spectrum (LTE-U) system, an NR-based access to unlicensed spectrum (NR-U) system, a wireless local area network (WLAN), wireless fidelity (Wi-Fi), a 5th-generation (5G) communication system, a cellular Internet of things system, a cellular passive Internet of things system, a subsequent evolved system of a 5G NR system, and a 6G system and a subsequent evolved system thereof. It should be understood that in some embodiments of the present disclosure, the "5G" is also referred to as "5G NR" or "NR".

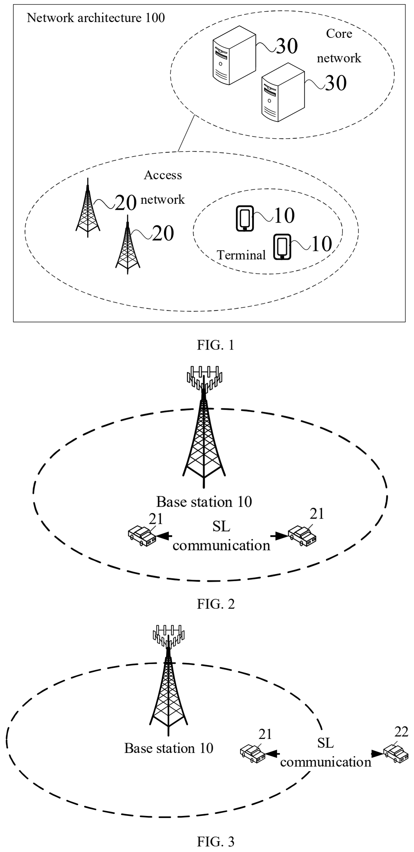

FIG. 1 is a schematic diagram of a network architecture according to some exemplary embodiments of the present disclosure. The network architecture 100 includes: a terminal 10, an access network device 20, and a core network device 30.

The terminal 10 may refer to a user device, an access terminal, a subscriber unit, a subscriber station, a mobile station, a mobile terminal, a remote station, a remote terminal, a mobile device, a wireless communication device, a user agent, or a user apparatus. In some embodiments, the terminal 10 is alternatively a personal digital assistant (PDA), a handheld device with a wireless communication function, a computing device or another processing device connected to a wireless modem, an in-vehicle device, a wearable device, a terminal in a 5th-generation system (5GS), a terminal in a public land mobile network (PLMN) evolved in the future, or the like, which is not limited in the embodiments of the present disclosure. For convenience of description, the devices described above are collectively referred to as the terminal. A plurality of terminals 10 are usually deployed, and one or more terminals 10 may be distributed in a cell managed by each access network device 20.

The access network device 20 is a device deployed in an access network to provide a wireless communication function for the terminal 10. The access network device 20 may include various forms of macro base stations, micro base stations, relay stations, access points, or the like. As communication technologies evolve, the name "access network device" may change. For convenience of description, in the embodiments of the present disclosure, the above apparatuses for providing the terminals 10 with the wireless communication function are collectively referred to as the access network device. In some embodiments, a communication relationship is established between the terminal 10 and the core network device 30 through the access network device 20. In the embodiments of the present disclosure, unless specifically stated otherwise, the "network device" refers to the access network device 20, such as a base station.

The core network device 30 is a device deployed in a core network. The core network device 30 mainly functions to provide user connections, user management, and service bearing, and serves as a bearer network to provide an interface to an external network. In some embodiments, the access network device 20 and the core network device 30 communicate with each other through an interface technology, e.g., an NG interface in a 5G NR system.

The access network device is an access device through which terminals wirelessly access the network architecture. The access network device mainly functions to radio resource management on the air interface, quality of service (QoS) management, data compression and encryption, or the like. For example, the access network device includes base stations such as NodeB, evolved NodeB (eNodeB), base stations in 5G mobile communication systems or new radio communication systems, and base stations in future mobile communication systems.

The core network device includes unified data management (UDM), an access and mobility management function (AMF), a location management function (LMF) network element, and a policy control function (PCF).

The UE is connected via an access stratum to a (radio) access network (R)AN over a Uu interface to exchange access stratum messages and transmit wireless data, and the UE is connected via a non-access stratum (NAS) to the AMF over an N1 interface to exchange NAS messages. The AMF is a mobility management function in the core network. The PCF is a policy management function in the core network, and functions to policies related to mobility management, session management, billing, or the like on the UE. The PCF performs data transmission with an external application function (AF) over an N5 interface.

First, related content involved in the present disclosure is described.

An **SL positioning client UE** refers to a third-party UE other than an anchor UE and a target UE, and initiates a ranging/SL positioning service request on behalf of an application residing thereon. In some embodiments, the SL positioning client UE does not support a ranging/SL positioning capability, and needs to establish the communication between the SL positioning client UE and the anchor UE/target UE via PC5 or 5GC to transmit ranging/SL positioning service requests and results.

The **target UE** refers to a UE for which a distance, a direction, and/or a position are measured with the support of one or more anchor UEs in SL in a ranging/SL positioning-based service.

The **anchor UE** refers to a UE that supports the positioning of the target UE. For example, the anchor UE transmits and/or receives reference signals for SL positioning, provides positioning-related information, or the like over an SL. In some embodiments, the anchor UE refers to a UE for transmitting and/or receiving reference signals for SL positioning over an SL. In some embodiments, the anchor UE refers to a UE that provides positioning-related information to the target UE or a server UE. In some embodiments, the anchor UE is also referred to as an SL positioning reference UE. In some embodiments, an anchor UE with a known position or capable of acquiring its own position via Uu positioning is also referred to as an anchor UE (located UE) capable of acquiring its own position.

An **SL positioning server UE** refers to a UE with assistance data distribution and/or position calculation functions as determined based on a ranging/SL positioning service request. In some embodiments, the SL positioning server UE interacts with the target UE, the anchor UE, or a UE other than the anchor UE and the target UE via the PC5 as necessary, to determine a ranging/SL positioning method, distribute assistance data, and calculate a position of the target UE. In some embodiments, the SL positioning server UE is at least one of: the target UE; the anchor UE; or a UE other than the anchor UE and the target UE.

### SL transmission technology

Different from a conventional cellular system in which communication data is received or transmitted by an access network device, SL transmission refers to direct communication data transmission between terminals over an SL.

In the SL transmission, based on the network coverage of communicating terminals, the communications includes SL communication within the network coverage, SL communication partially within the network coverage, and SL communication out of the network coverage, which are respectively illustrated in FIGS. 2, 3, and 4.

As illustrated in FIG. 2, in the SL communication within the network coverage, all terminals 21 in the SL communication are within the coverage of the same base station 10. Thus, the terminals 21 receive configuration signaling from the base station 10 and perform the SL communication based on the same SL configuration.

As illustrated in FIG. 3, in the SL communication partially within network coverage, a part of terminals 21 in the SL communication are within the coverage of a base station. The part of terminals 21 receives configuration signaling from the base station 10 and performs the SL communication based on the configuration of the base station 10. However, the terminals 22 out of the network coverage fails to receive the configuration signaling from the base station 10. In this case, the terminals 22 out of the network coverage determine an SL configuration for the SL communication based on pre-configuration information and information carried in a physical sidelink broadcast channel (PSBCH) transmitted by the terminal 21 within the network coverage.

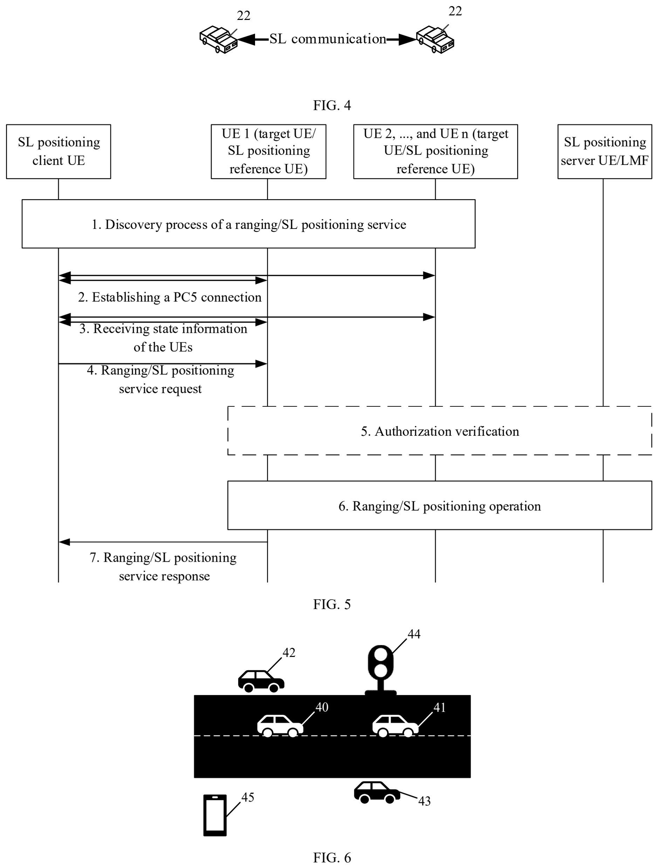

As illustrated in FIG. 4, in the SL communication out of network coverage, all terminals 22 in the SL communication are out of the network coverage, and thus determine an SL configuration for the SL communication based on pre-configuration information.

### SL positioning procedure

In some embodiments, it is specified that a UE-only operation or a network-based operation is applied in the ranging/SL positioning process.

In some embodiments, the UE-only operation is applicable in the following cases:
· An NG-RAN serves neither a target UE nor an anchor UE.
· The 5GC network does not support the network-based operation. In the case where the 5GC network does not support the network-based operation, an indication on whether the UE is allowed to perform ranging/SL positioning using the UE-only operation is carried in a policy/parameter provided to the UE, such that the indication is provided to the UE. The target UE may initiate a UE-only operation process based on the indication.
· An SL-mobile originated-location request (SL-MO-LR) is rejected by the network.

In some embodiments, the network-based operation is applicable to any other case.

In some embodiments, the SL positioning client UE initiates a ranging/SL positioning service request through another UE (a target UE or an SL positioning reference UE) over a PC5 interface, and acquires a service result through the UE.

FIG. 5 is a schematic diagram of an SL positioning procedure according to some exemplary embodiments of the present disclosure. FIG. 5 includes an SL positioning client UE, UE 1, UE 2, ..., and UE n, and an SL positioning server UE. UE 1 is also referred to as a target UE, UE 2, ..., and UE n are also referred to as anchor UEs, and the SL positioning server UE is also referred to as a server UE. Relevant processes of the SL positioning procedure are briefly described as follows.

**In S1,** the SL positioning client UE performs a discovery process of a ranging/SL positioning service. **In** S2, the SL positioning client UE establishes a PC5 connection with the discovered UEs (UE 1, UE 2, ..., and UE n).

**In S3,** the SL positioning client UE receives state information of the UEs.

In some embodiments, the state information includes NAS connection.

In some embodiments, the SL positioning client UE selects UE 1 from the discovered UEs to receive a ranging/SL positioning service request. In some embodiments, the SL positioning client UE selects at least one UE from the discovered UEs to perform a ranging/SL positioning operation, and the at least one UE serves as a target UE or an SL positioning reference UE for ranging/SL positioning.

**In S4,** the SL positioning client UE transmits the ranging/SL positioning service request to UE 1.

In some embodiments, the ranging/SL positioning request includes at least one of: information of the SL positioning client, information of the target UE, or information of the SL positioning reference UE. In some embodiments, UE 1 determines to use the UE-only operation or the network-based operation. In some embodiments, in the case where UE 1 is provided with an NAS connection, UE 1 selects the network-based operation, that is, an LMF is selected to calculate a ranging/SL positioning result; and in the case where UE 1 is not provided with an NAS connection, UE 1 selects the UE-only operation, that is, the SL positioning server UE is selected to calculate a ranging/SL positioning result.

**In S5,** authorization verification is performed. In S6, the ranging/SL positioning operation is performed. In S7, the SL positioning client UE receives a ranging/SL positioning response from UE 1.
**1. For the network-based operation,** in some embodiments, UE 1 initiates an LS-MO-LR request to request the LMF to calculate the ranging/SL positioning service.
**2. For the UE-only operation,** in some embodiments, UE 1 selects an SL positioning server UE and requests the SL positioning server UE to calculate the ranging/SL positioning service.

### Discovery and selection of the SL positioning server UE

In some embodiments, the target UE discovers and selects the SL positioning server UE in the case where the target UE satisfies one or more of the following criteria or conditions: (1) The target UE and the anchor UE currently lack a network service supporting ranging/SL positioning. For example, the target UE and the anchor UE are out of the coverage, or a server network does not support the ranging/SL positioning. The support for ranging/SL positioning is configured in the AMF based on network capabilities. In the case where the AMF receives that the UE supports the ranging/SL positioning capability, the AMF includes a ranging/SL position support indicator in a registration acceptance message to indicate that the server network supports the ranging/SL positioning. The anchor UE and the target UE indicate to each other whether their server network supports the ranging/SL positioning. In the case where the UE has no available NAS connection, an indication that the server network does not support the ranging/SL positioning is reused for notification. (2) The target UE does not support a functionality of an SL positioning server UE. (3) The anchor UE does not support a functionality of an SL positioning server UE.

In some embodiments, in the case where a UE is authorized as an SL positioning server UE in a given PLMN, the UE indicates that the UE is an "SL positioning server UE" from a list of supported roles during a discovery duration.

In some embodiments, the target UE needs to discover and select an SL positioning server UE in the same server PLMN or different server PLMNs of the target UE and the anchor UE.

### Authorization verification in ranging/SL positioning

In some embodiments, the authorization verification for ranging/SL positioning is verification based on a UE privacy profile, and includes: authorization for a service exposure request, authorization for an announced role, and privacy verification.

In the ranging/SL positioning service, a method has been proposed to provide a positioning or ranging result to the SL positioning client UE. The SL positioning client UE may establish a PC5 connection with another UE, and initiate a ranging/SL positioning result exposure request to the another UE via the PC5 connection. In addition, the SL positioning client UE may not only request to position the target UE, but also request to acquire a relative distance or direction between the two UEs. Information such as the positioned position and the relative distance and direction is privacy data. Therefore, in the ranging/SL positioning service, it is necessary to determine whether the privacy data of the UEs in the ranging/SL positioning request is exposed to the SL positioning client, that is, it is necessary to determine whether the SL positioning client UE is authorized to acquire the privacy data of the UEs. The UEs may be the target UE, the SL positioning reference UE, or the located UE. The above processes of determining whether the SL positioning client UE is authorized to acquire the privacy data of the UEs is referred to as privacy verification.

In some practices, for the above scenario, the request of the SL positioning client UE is transmitted to another UE over the PC5 interface. In the case where the privacy verification is performed by network elements (a sidelink positioning key management function (SLPKMF) and a gateway mobile location centre (GMLC)), the UEs requested to expose the privacy data determine whether to expose the privacy data to the SL positioning client UE. However, in some practices, a detailed procedure of performing the privacy verification by the UEs requested to expose the privacy data is not illustrated.

FIG. 6 is a schematic diagram of a ranging/SL positioning service process according to some exemplary embodiments of the present disclosure. FIG. 6 includes vehicles 40 to 43, a signal lamp 44, and a terminal device 45.

At a moment, the vehicles 40 and 41 are driving on the road; the vehicles 42 and 43 are parked on the sides of the road; the signal lamp 44 is further provided on the road, and a communication device is mounted on the signal lamp 44 for communication with terminal devices; and a pedestrian holding the terminal device 45 is standing by the roadside.

In some embodiments, the vehicle 40 initiates an SL positioning request to request to acquire an absolute position of the vehicle 40. In this case, the vehicle 40 acts as the SL positioning client UE and the target UE, that is, the vehicle 40 corresponds to the SL positioning client UE and UE 1 in FIG. 5. The vehicle 40 discovers the vehicles 41 to 43, the signal lamp 44, and the terminal device 45 in the discovery process. Since the vehicle 40 supports a functionality of an SL positioning server UE, the vehicle 40 serves as the SL positioning server UE to assist in calculation of a ranging/SL positioning result. The vehicle 40 (i.e., the SL positioning server UE) initiates a ranging/SL positioning request to all discovered surrounding devices. The ranging/SL positioning request carries information of a client UE (user information or an application layer identifier (ID) of the vehicle 40). The vehicles 41 to 43, the signal lamp 44, and the terminal device 45 receive the information of the client UE from the vehicle 40. The terminal device 45 determines, based on privacy verification information thereof, that the terminal device 45 is unwilling to expose privacy data thereof to the vehicle 40, and the vehicles 41 to 43 and the signal lamp 44 determine, based on privacy verification information thereof, that the vehicles 41 to 43 and the signal lamp 44 are all willing to expose privacy data thereof to the vehicle 40 (i.e., the SL positioning client UE). In this case, upon the verification, the vehicle 40 (i.e., the SL positioning server UE) determines that the vehicles 41 to 43 and the signal lamp 44 serve as SL positioning reference UEs (which are also referred to as anchor UEs) for the SL positioning client UE (the vehicle 40) to position the target UE (the vehicle 40), and the terminal device 45 does not participate in the ranging/SL positioning process of the vehicle 40.

In some embodiments, the pedestrian holding the terminal device 45 desires to acquire a position relative to her/his vehicle 42. In this case, the terminal device 45 serves as the SL positioning client UE, and the vehicle 42 serves as the target UE. The terminal device 45 discovers the vehicle 40 in the discovery process. Since the vehicle 40 supports the functionality of the SL positioning server UE, the vehicle 40 is selected as the SL positioning server UE to assist in calculation of the ranging/SL positioning result.

The present disclosure provides a privacy verification mechanism. The privacy verification mechanism is implemented based on at least one of:
· identification information of the UE; or
· privacy verification information.

### 1. Identification information of the UE.

In some embodiments, the identification information of the UE includes at least one of: (1) user information of the UE; or (2) an application layer ID of the UE. The user information of the UE is used to indicate the UE at a UE level, and the application layer ID of the UE is used to indicate the UE at an application layer level.

In some embodiments, the UE is the SL positioning client UE, and the identification information of the SL positioning client UE includes at least one of: user information of the SL positioning client UE, or an application layer ID of the SL positioning client UE.

In some embodiments, the UE is the SL positioning server UE, and the identification information of the SL positioning server UE includes at least one of: user information of the SL positioning server UE, or an application layer ID of the SL positioning server UE.

The identification information of the UE may be carried by supplementary ranging and sidelink positioning protocol (RSPP) signaling in the ranging/SL positioning service.

### 2. Privacy verification information.

In some embodiments, the privacy verification information is a location services (LCS) UE privacy profile. The LCS UE privacy profile is used for privacy verification requested at an absolute position. Alternatively, the privacy verification information is a ranging/SL positioning UE privacy profile. The ranging/SL positioning UE privacy profile is used for privacy verification requested at a relative position, a relative speed, and a direction.

In some embodiments, the privacy verification information is also referred to as privacy check verification information, a privacy profile, a privacy file, privacy information, subscription information, or the like.

In some embodiments, one UE corresponds to one piece of privacy verification information.

In some embodiments, the privacy verification information is stored in the UE, and the privacy verification information is subscription information stored in the UDM.

In some embodiments, the privacy verification information is provided by at least one of an application (APP) provider, an AF, or an operator. That is, the privacy verification information is configured for the UE by at least one of the APP provider, the AF, or the operator.

In some embodiments, the privacy verification information includes at least one of:
(1) A first type. The first type is used to indicate a type of an SL positioning client UE authorized to acquire privacy data of a first UE.

In some embodiments, the first type includes an application ID. For example, all applications owned by an application developer share an application ID. In the case where an application in the SL positioning client UE initiates a ranging/SL positioning request, the request carries the application ID of the application.

(2) First information. The first information is used to indicate information of the SL positioning client UE authorized to acquire the privacy data of the first UE.

In some embodiments, the first information includes identification information of the SL positioning client UE, for example, an application layer ID of the SL positioning client UE. The application layer ID of the SL positioning client UE is used to indicate a client UE.

(3) A second type. The second type is used to indicate a type of an SL positioning server UE authorized to acquire the privacy data of the first UE.

In some embodiments, the second type includes an application identifier. For example, all applications owned by an application developer share an application ID. In the case where an application in the SL positioning server UE assists in the ranging/SL positioning service, the first UE determines, based on the application ID of the application, whether to authorize the SL positioning server UE to acquire privacy data of the first UE.

(4) Second information. The second information is used to indicate information of the SL positioning server UE authorized to acquire the privacy data of the first UE.

In some embodiments, the second information includes identification information of the SL positioning server UE, for example, an application layer ID of the SL positioning server UE. The application layer ID of the SL positioning server UE is used to indicate an SL positioning server UE.

Moreover, two types of UEs are involved in the privacy verification process, that is, a first UE and a second UE. Next, the identities (which are also referred to as classifications, categories, or the like) of the first UE and the second UE are described briefly.
· The first UE is a target UE, an SL positioning reference UE, a UE with a known position, a UE serving as a target UE, a UE that performs the privacy verification, a to-be-measured UE, or an operated UE. Referring to the ranging/SL positioning service procedure illustrated in FIG. 5, the first UE is any UE in UE 1 to UE n.
· The second UE is a target UE, an SL positioning reference UE, a UE with a known position, or a UE serving as a target UE. Referring to the ranging/SL positioning service procedure illustrated in FIG. 5, the second UE is UE 1.

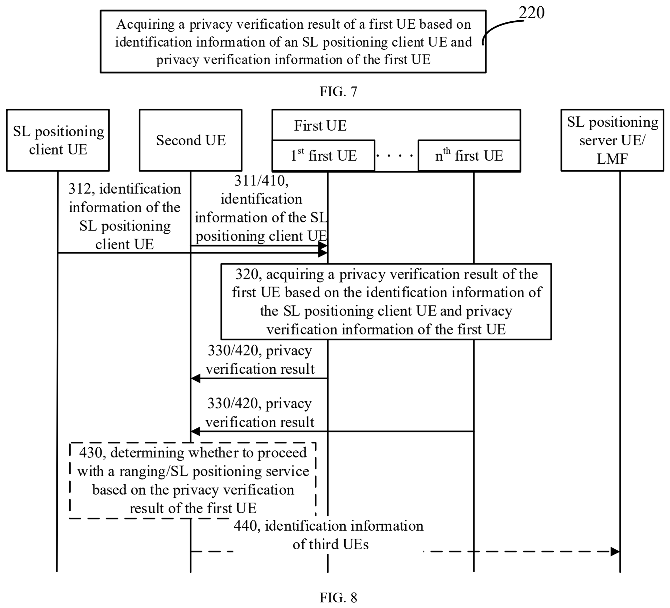

FIG. 7 is a flowchart of a method for privacy verification according to some exemplary embodiments of the present disclosure. The method is performed by a first UE, and the method includes the following processes.

**In S220,** a privacy verification result of the first UE is acquired based on identification information of an SL positioning client UE and privacy verification information of the first UE.

The privacy verification result is used to indicate whether the SL positioning client UE is authorized to acquire privacy data of the first UE. In some embodiments, the privacy verification information is stored in the first UE.

In some embodiments, the first UE performs the privacy verification based on the identification information of the SL positioning client UE and the privacy verification information stored in the first UE, such that the privacy verification result of the first UE is acquired. In some embodiments, the privacy verification result is used to indicate whether the SL positioning client UE is authorized to acquire the privacy data of the first UE. That is, the privacy verification result is used to indicate whether the first UE allows to expose the privacy data of the first UE to the SL positioning client UE. That is, the privacy verification result is used to indicate whether the first UE allows the SL positioning client UE to acquire the privacy data of the first UE. That is, the privacy verification result is used to indicate whether the first UE agrees to participate in a ranging/SL positioning service of the SL positioning client UE.

For example, the first UE is UE a, and the SL positioning client UE is UE b. The privacy verification information of UE a includes UE type 1 and UE type 2, that is, UE a supports SL positioning client UEs of UE type 1 and UE type 2 to acquire the privacy data of UE a. The identification information of UE b includes user information of UE b, and the user information of UE b is used to indicate that UE b is a UE of UE type 1. UE a acquires, based on the identification information of UE b and the privacy verification information of UE a, a privacy verification result indicating that UE a supports UE b acquiring the privacy data of UE a. Alternatively, the privacy verification information of UE a includes application type 1 and application type 2, that is, UE a supports applications of application type 1 and application type 2 to acquire the privacy data of UE a. The identification information of UE b includes user information of UE b, and the user information of UE b is used to indicate that an application requesting to acquire the privacy data of UE at this time is an application of application type 3. UE a acquires, based on the identification information of UE b and the privacy verification information of UE a, a privacy verification result indicating that UE a does not support UE b to acquire the privacy data of UE a. The privacy verification information of UE a includes an application layer ID of UE b, that is, UE a supports UE b to acquire the privacy data of UE a. The identification information of UE b includes the application layer ID of UE b. UE a acquires, based on the identification information of UE b and the privacy verification information of UE a, a privacy verification result indicating that UE a supports UE b to acquire the privacy data of UE a.

In summary, the method according to the embodiments of the present disclosure illustrates the process of the first UE performing the privacy verification. That is, the privacy verification result of the first UE is acquired by performing the privacy verification based on the identification information of the SL positioning client UE and the privacy verification information of the first UE. In the method, the first UE performs the determination based on its own privacy verification information, such that the privacy verification is performed, exposure of the privacy verification information of the first UE is avoided, and the security of the privacy verification process is improved.

FIG. 8 is a flowchart of a method for privacy verification according to some exemplary embodiments of the present disclosure. The method is performed by a first UE, and the method includes the following processes. In some embodiments, S311 and S312 are parallel processes, and regarding the first UE receiving identification information of an SL positioning client UE, only S311 or S312 is performed.

**In S311,** the identification information of the SL positioning client UE from a second UE is received.

In some embodiments, privacy verification information is stored in the first UE.

In some embodiments, a PC5 connection exists between the first UE and the second UE, and the first UE receives the identification information of the SL positioning client UE from the second UE via the PC5 connection.

In some embodiments, no PC5 connection exists between the first UE and the second UE, and the first UE establishes a PC5 connection with the second UE and then receives the identification information of the SL positioning client UE from the second UE via the PC5 connection.

**In S312,** the identification information of the SL positioning client UE from the SL positioning client UE is received.

In some embodiments, the first UE is a target UE, a PC5 connection exists between the first UE and the SL positioning client UE, and the first UE receives the identification information of the SL positioning client UE from the SL positioning client UE via the PC5 connection.

In some embodiments, the first UE is a target UE, no PC5 connection exists between the first UE and the SL positioning client UE, and the first UE establishes a PC5 connection with the SL positioning client UE and then receives the identification information of the SL positioning client UE from the second UE via the PC5 connection.

**In S320,** a privacy verification result of the first UE is acquired based on the identification information of the SL positioning client UE and the privacy verification information of the first UE, wherein the privacy verification result is used to indicate whether the SL positioning client UE is authorized to acquire privacy data of the first UE. In some embodiments, the execution process of S320 is similar to that of S220, and is not repeated herein.

**In S330,** the privacy verification result is transmitted to the second UE.

In some embodiments, a PC5 connection exists between the first UE and the second UE, and the first UE transmits the privacy verification result to the second UE via the PC5 connection. In some embodiments, no PC5 connection exists between the first UE and the second UE, and the first UE establishes a PC5 connection with the second UE and then transmits the privacy verification result to the second UE via the PC5 connection.

In some embodiments, the first UE transmits the privacy verification result to the second UE.

In some embodiments, the first UE includes n first UEs. n is a positive integer. The privacy verification results of the n first UEs are used for the second UE to determine whether to proceed with the ranging/SL positioning service. The determination of the second UE on whether to proceed with the ranging/SL service includes at least one of: determining, by the second UE, to transmit a ranging/SL positioning service request to an SL positioning server UE in the case where privacy verification results of the n first UEs are all a first result, wherein the first result indicates that the SL positioning client UE is authorized to acquire the privacy data of the n first UEs; determining, by the second UE, to transmit the ranging/SL positioning service request to an LMF in the case where the privacy verification results of the n first UEs are all the first result; determining, by the second UE, to transmit a ranging/SL positioning service rejection message to the SL positioning client UE in the case where the privacy verification results of the n first UEs are all a second result, wherein the second result indicates that the SL positioning client UE is not authorized to acquire the privacy data of the n first UEs; or determining, by the second UE, a processing mode according to a privacy verification rule in the case where the privacy verification results of a part of the n first UEs are the first result.

In some embodiments, the processing mode includes at least one of: transmitting the ranging/SL positioning service request to the SL positioning server UE, transmitting the ranging/SL positioning service request to the LMF, or transmitting the ranging/SL positioning service rejection message to the SL positioning client UE.

In some embodiments, the privacy verification rule is provided by an application layer of the second UE, or the privacy verification rule is transmitted by the SL positioning client UE to the second UE. The privacy verification rule is used to instruct the second UE to determine the processing mode. The privacy verification rule is related to at least one of the privacy verification results of the n first UEs or requirements of the ranging/SL positioning service.

In some embodiments, the first UE whose privacy verification result is the first result is referred to as a third UE, that is, the n first UEs include m third UEs. Privacy verification results of the m third UEs are all the first result. m is a positive integer and m≤n. The ranging/SL positioning service request includes pieces of identification information of the m third UEs, and each of the m third UEs corresponds to one of the pieces of identification information. In some embodiments, the identification information of the third UE includes at least one of: user information of the third UE, or an application layer ID of the third UE. That is, in the case where the second UE determines to proceed with the ranging/SL positioning service, the ranging/SL positioning service request transmitted by the second UE to the SL positioning server UE or the LMF includes the identification information of all or a part of the m third UEs.

In some embodiments, the identification information of each of the m third UEs is used for the SL positioning server UE or the LMF to determine whether the each of the m third UEs participates in the ranging/SL positioning service; or the ranging/SL positioning service request further includes capability information of the m third UEs, and the capability information of each of the m third UEs and the identification information of the each of the m third UEs are used for the SL positioning server UE or the LMF to determine whether the each of the m third UEs participates in the ranging/SL positioning service.

In summary, in the method according to the embodiments of the present disclosure, a source of the identification information of the SL positioning client UE in the privacy verification process is illustrated. That is, the identification information is transmitted by the second UE or the SL positioning client UE. The necessary information for the privacy verification is provided to the first UE in method, such that the first UE successfully performs the privacy verification. In addition, the processing mode of the privacy verification result is illustrated. That is, the privacy verification result is transmitted to the second UE, and the second UE determines whether to proceed with the ranging/SL positioning service based on the privacy verification result, transmits the ranging/SL positioning service request to the SL positioning server UE or the LMF in response to determining to proceed with the ranging/SL positioning service, and informs the SL positioning client UE of the rejection of the ranging/SL positioning service in response to determining not to proceed with the ranging/SL positioning service, such that the privacy verification in the ranging/SL positioning service process is performed in the case where the privacy data of the first UE is not exposed. Further, how to further determine the first UEs participating in the ranging/SL positioning service on the basis of proceeding with the ranging/SL positioning service is illustrated. That is, the identification information of the third UEs determined to allow the exposure of the privacy data is transmitted to the SL positioning server UE or the LMF. The SL positioning server UE or the LMF selects the UEs participating in the ranging/SL positioning service, such that the ranging/SL positioning service process based on privacy verification is achieved.

FIG. 8 is a flowchart of a method for privacy verification according to some exemplary embodiments of the present disclosure. The method is performed by a second UE, and the method includes the following processes.

**In S410,** identification information of an SL positioning client UE is transmitted to a first UE.

The first UE is configured to acquire a privacy verification result of the first UE based on the identification information of the SL positioning client UE and privacy verification information of the first UE, and the privacy verification result is used to indicate whether the SL positioning client UE is authorized to acquire privacy data of the first UE.

In some embodiments, a PC5 connection exists between the first UE and the second UE, and the second UE transmits the identification information of the SL positioning client UE to the first UE via the PC5 connection. In some embodiments, no PC5 connection exists between the first UE and the second UE, and the second UE establishes a PC5 connection with the first UE and then transmits the identification information of the SL positioning client UE to the first UE via the PC5 connection.

In some embodiments, in the case where the second UE has pre-acquired the identification information of the SL positioning client UE or the second UE has stored the identification information of the SL positioning client UE, the second UE transmits the identification information of the SL positioning client UE to the first UE. Alternatively, in the case where the second UE has not pre-acquired the identification information of the SL positioning client UE, the second UE first acquires the identification information of the SL positioning client UE and then transmits the identification information of the SL positioning client UE to the first UE.

In some embodiments, the privacy verification result is used to indicate whether the SL positioning client UE is authorized to acquire the privacy data of the first UE. That is, the privacy verification result is used to indicate whether the first UE allows to expose the privacy data of the first UE to the SL positioning client UE. That is, the privacy verification result is used to indicate whether the first UE allows the SL positioning client UE to acquire the privacy data of the first UE. That is, the privacy verification result is used to indicate whether the first UE agrees to participate in a ranging/SL positioning service of the SL positioning client UE.

In some embodiments, the second UE transmits the identification information of the SL positioning client UE to UEs that may participate in the ranging/SL positioning service, that is, the second UE transmits the identification information of the SL positioning client UE to at least one first UE. The first UE is a target UE, an SL positioning reference UE, or a UE with a known position. For example, the at least one UE includes a target UE and other UEs located within a peripheral range of the target UE. The other UEs located within the peripheral range of the target UE are referred to as SL positioning reference UEs, or referred to as candidate SL positioning reference UEs.

In some embodiments, the privacy verification information is stored in the first UE.

**In S420,** the privacy verification result from the first UE is received.

In some embodiments, a PC5 connection exists between the first UE and the second UE, and the second UE receives the privacy verification result from the first UE via the PC5 connection. In some embodiments, no PC5 connection exists between the first UE and the second UE, and the second UE establishes a PC5 connection with the first UE and then receives the privacy verification result from the first UE via the PC5 connection.

In some embodiments, the second UE receives the privacy verification result from the at least one first UE, and the privacy verification result of each first UE is used to indicate whether the SL positioning client UE is authorized to acquire the privacy data of the first UE.

**In S430,** whether to proceed with the ranging/SL positioning service is determined based on the privacy verification result of the first UE.

In some embodiments, the first UE includes n first UEs. n is a positive integer. The privacy verification results of the n first UEs are used for the second UE to determine whether to proceed with the ranging/SL positioning service. That is, determining whether to proceed with the ranging/SL positioning service based on the privacy verification result of the first UE includes at least one of: determining to transmit a ranging/SL positioning service request to an SL positioning server UE in the case where privacy verification results of the n first UEs are all a first result, wherein the first result indicates that the SL positioning client UE is authorized to acquire the privacy data of the n first UEs; determining to transmit the ranging/SL positioning service request to an LMF in the case where the privacy verification results of the n first UEs are all the first result; determining to transmit a ranging/SL positioning service rejection message to the SL positioning client UE in the case where the privacy verification results of the n first UEs are all a second result, wherein the second result indicates that the SL positioning client UE is not authorized to acquire the privacy data of the n first UEs; or determining a processing mode according to a privacy verification rule in the case where the privacy verification results of a part of the n first UEs are the first result.

For example, in a UE-only operation scenario, in the case where the privacy verification results of the n first UEs are all the first result, the second UE determines to transmit the ranging/SL positioning service request to the SL positioning server UE. In a network-based operation scenario, in the case where the privacy verification results of the n first UEs are all the first result, the second UE determines to transmit the ranging/SL positioning service request to the LMF.

In some embodiments, the processing mode includes at least one of: transmitting the ranging/SL positioning service request to the SL positioning server UE, transmitting the ranging/SL positioning service request to the LMF, or transmitting the ranging/SL positioning service rejection message to the SL positioning client UE.

In some embodiments, the privacy verification rule is provided by an application layer of the second UE, or the privacy verification rule is transmitted by the SL positioning client UE to the second UE.

**In S440,** identification information of third UEs is transmitted to the SL positioning server UE/LMF.

In some embodiments, the first UE whose privacy verification result is the first result is referred to as a third UE, that is, the n first UEs include m third UEs. The privacy verification results of the m third UEs are the first result. m is a positive integer and m≤n. The ranging/SL positioning service request includes pieces of identification information of the m third UEs, and each of the m third UEs corresponds to one of the pieces of identification information. That is, the second UE selects the third UEs based on the privacy verification results of the first UEs, and acquires the identification information of the third UEs.

For example, the first UE whose privacy verification result is the first result is referred to as the third UE. The privacy verification rule is related to the privacy verification results of the n first UEs. According to the privacy verification rule, the ranging/SL positioning service proceeds in the case where a ratio of a quantity of the third UEs to a quantity of the first UEs is greater than a service threshold, or the ranging/SL positioning service does not proceed in the case where the ratio of the quantity of the third UEs to the quantity of the first UEs is less than the service threshold,. Alternatively, the privacy verification rule is related to requirements of the ranging/SL positioning service. The ranging/SL positioning service requires participation of at least m first UEs. According to the privacy verification rule, the ranging/SL positioning service proceeds in the case where the quantity of the third UEs is greater than or equal to m, or the ranging/SL positioning service does not proceed in the case where the quantity of the third UEs is less than m. The processing mode of proceeding the ranging/SL positioning service includes: transmitting the ranging/SL positioning service request to the SL positioning server UE, or transmitting the ranging/SL positioning service request to the LMF. The processing mode of not proceeding the ranging/SL positioning service includes: transmitting the ranging/SL positioning service rejection message to the SL positioning client UE.

In some embodiments, the identification information of the third UE includes at least one of: user information of the third UE, or an application layer ID of the third UE.

In some embodiments, the identification information of each of the m third UEs is used for the SL positioning server UE or the LMF to determine whether the each of the m third UEs participates in the ranging/SL positioning service; or the ranging/SL positioning service request further includes capability information of the m third UEs, and the capability information of each of the m third UEs and the identification information of the each of the m third UEs are used for the SL positioning server UE or the LMF to determine whether the each of the m third UEs participates in the ranging/SL positioning service. For example, the m third UEs are UEs whose privacy data the SL positioning client is authorized to acquire. The SL positioning server UE or the LMF selects, based on the identification information of the m third UEs, all or a part of third UEs from the m third UEs to participate in the ranging/SL positioning service. Alternatively, the ranging/SL positioning service request further includes capability information of the third UEs. The capability information of the third UEs is used to indicate whether the third UEs support assisting in ranging or positioning of the target UE. For example, in the case where only five third UEs in the m third UEs support assisting in ranging or positioning of the target UE, when receiving a ranging/SL positioning service request, the SL positioning server UE or the LMF selects, based on the capability information of the m third UEs and the identification information of the m third UEs, the five UEs that support assisting in ranging or positioning of the target UE to participate in the ranging/SL positioning service.

In some embodiments, in a UE-only operation scenario, a PC5 connection exists between the SL positioning server UE and the second UE; and in a network-based operation scenario, the LMF is connected to the second UE over an N1 interface.

In summary, in the method according to the embodiments of the present disclosure, the method for the second UE to provide the identification information of the SL positioning client UE for the first UE is illustrated, such that the first UE acquires one of the pieces of necessary information for the privacy verification, and the entire ranging/SL positioning service process including the privacy verification is successfully performed. In addition, the processing mode of the second UE on the privacy verification result transmitted by the first UE is illustrated. The second UE determines whether to proceed with the ranging/SL positioning service based on the privacy verification result, transmits the ranging/SL positioning service request to the SL positioning server UE or the LMF in response to determining to proceed with the ranging/SL positioning service, and informs the SL positioning client UE of the rejection of the ranging/SL positioning service in response to determining not to proceed with the ranging/SL positioning service, such that the privacy verification in the ranging/SL positioning service process is performed in the case where the privacy data of the first UE is not exposed. Further, how to further determine the first UEs participating in the ranging/SL positioning service on the basis of proceeding with the ranging/SL positioning service is illustrated. That is, the identification information of the third UEs determined to allow the exposure of the privacy data is transmitted to the SL positioning server UE or the LMF. The SL positioning server UE or the LMF selects the UEs participating in the ranging/SL positioning service, such that the ranging/SL positioning service process based on privacy verification is achieved.

Scenarios that the ranging/SL positioning service may encounter include a UE-only operation scenario and a network-based operation scenario. The privacy verification procedure in the ranging/SL positioning service process varies for different scenarios. The privacy verification procedure in the ranging/SL positioning service process is described hereinafter in different scenarios.

### 1. The second UE is UE 1, in a network-based operation scenario.

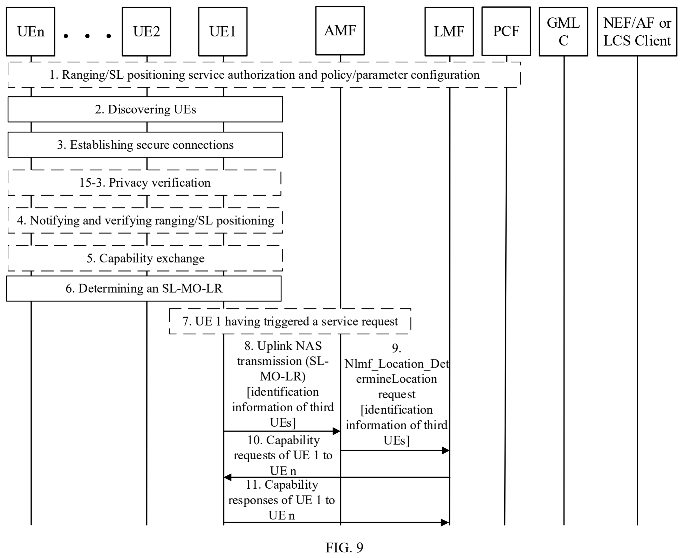

FIG. 9 is an overall flowchart of a method for privacy verification according to some exemplary embodiments of the present disclosure. FIG. 9 includes UE 1, UE 2, ..., and UE n. UE 1 may be a target UE or an SL positioning reference UE, and UE 1 is also referred to as a UE serving as a target UE. UE 2, ..., and UE n may also be target UEs, SL positioning reference UEs, or UEs with known positions. An SL positioning server UE is also referred to as a server UE. That is, UE 1, UE 2, ..., and UE n may all be first UEs. Relevant processes of the privacy verification are briefly described as follows:

**In S1,** ranging/SL positioning service authorization and policy/parameter configuration are performed. In S2, UE 1 discovers UE 2, ..., and UE n. In S3, UE 1 establishes secure connections with UE 2, ..., and UE n.

**In S15-3,** UE 1 to UE n perform privacy verification.

In some embodiments, UE 1 receives identification information of an SL positioning client UE from the SL positioning client UE. In some embodiments, UE 1 acquires a privacy verification result of UE 1 based on the identification information of the SL positioning client UE and privacy verification information of UE 1. In this case, UE 1 is also referred to as a first UE.

In some embodiments, UE 1 treats UE 2, ..., and UE n as the first UEs via the secure connections with UE 2, ..., and UE n or selects at least one UE from UE 2, ..., and UE n as the first UE, and transmits the identification information of the SL positioning client UE to the first UE.

In some embodiments, the first UE acquires a privacy verification result of the first UE based on the identification information of the SL positioning client UE and the privacy verification information of the first UE. In some embodiments, the first UE transmits the privacy verification result to UE 1.

In some embodiments, UE 1 determines whether to proceed with the ranging/SL positioning service based on the privacy verification result of the first UE. In response to determining to proceed with the ranging/SL positioning service, UE 1 transmits identification information of third UEs to the SL positioning server UE. The third UE is a UE whose privacy verification results is the first result, and the first result indicates that the SL positioning client UE is authorized to acquire the privacy data of the first UE. The identification information of the third UEs is carried in a ranging/SL positioning service request transmitted to the SL positioning server UE. The specific implementation process of "determining whether to proceed with the ranging/SL positioning service based on the privacy verification result of the first UE" is illustrated in S430 e, and is not repeated herein.

In S4, ranging/SL positioning is notified and verified. In S5, UE 1 performs capability exchange with UE 2, ..., and UE n. In S6, an SL-MO-LR is determined.

In S7, UE 1 has triggered a service request. That is, UE 1 determines to proceed with the ranging/SL positioning service.

In S8, uplink NAS transmission is performed. In some embodiments, UE 1 transmits the identification information of the third UEs via an uplink NAS.

In S9, an N1mf_Location _DetermineLocation request is transmitted.

In some embodiments, the N1mf_Location_DetermineLocation request includes the identification information of the third UEs.

In some embodiments, the identification information of each of the third UEs is used for an LMF to determine whether the each of the third UEs participates in the ranging/SL positioning service; or the ranging/SL positioning service request further includes capability information of m third UEs, and the capability information of each of the m third UEs and the identification information of the each of the m third UEs are used for the LMF to determine whether the each of the m third UEs participates in the ranging/SL positioning service. In S10, capability requests of UE 1 to UE n are transmitted. In S11, capability responses of UE 1 to UE n are transmitted. In some embodiments, the LMF acquires the capability information of UE 1 to UE n in the capability responses. In some embodiments, the LMF determines whether the third UEs participate in the ranging/SL positioning service based on the identification information of the third UEs and the capability information of the third UEs.

In summary, in the method according to the embodiments of the present disclosure, the privacy verification process in the network-based operation scenario is illustrated. The first UE performs the privacy verification to ensure the security of the privacy verification process.

### 2. The second UE is UE 1 (which may be referred to as a UE serving as a target UE), in a UE-only operation scenario.

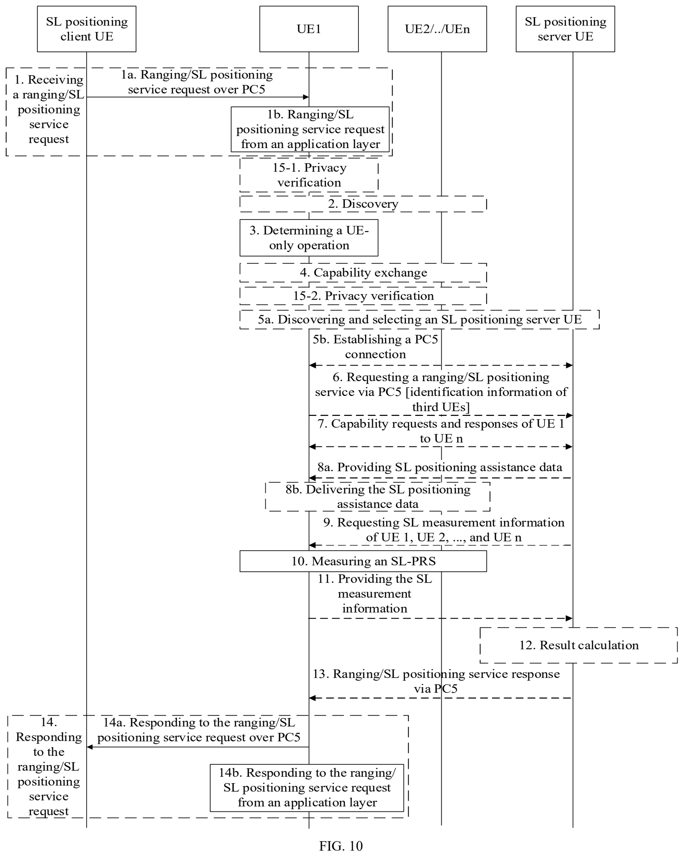

FIG. 10 is an overall flowchart of a method for privacy verification according to some exemplary embodiments of the present disclosure. FIG. 10 includes an SL positioning client UE, UE 1, UE 2, ..., and UE n, and an SL positioning server UE. UE 1 may be a target UE or an SL positioning reference UE, and UE 1 is also referred to as a UE serving as a target UE. UE 2, ..., and UE n may also be target UEs, SL positioning reference UEs, or UEs with known positions. The SL positioning server UE is also referred to as a server UE. That is, UE 1, UE 2, ..., and UE n may all be the first UE. Relevant processes of the privacy verification include S1 to S15-2.

**In S1,** UE 1 receives a ranging/SL positioning service request.

**In S1a,** the SL positioning client UE transmits the ranging/SL positioning service request over PC5 to UE 1.

In some embodiments, during the exposure of the ranging/SL positioning service via PC5, the SL positioning client UE is positioned via PC5. That is, the SL positioning client transmits the ranging/SL positioning service request to UE 1 over a PC5 interface.

In some embodiments, for absolute positioning, the ranging/SL positioning service request includes user information of the SL positioning client UE, user information of the target UE, the required positioning QoS, and an anchor UE list including at least one candidate anchor UE.

In some embodiments, for relative positions or ranging information, the ranging/SL positioning service request includes user information of the SL positioning client UE, user information of the target UE, user information of the SL positioning reference UEs (UE 2, ..., and UE n), and ranging/SL positioning QoS information.

In some embodiments, the ranging/SL positioning service request includes identification information of the SL positioning client. In some embodiments, the ranging/SL positioning service request further includes at least one of an application layer ID of a candidate SL positioning reference UE, user information of the candidate SL positioning reference UE, or a type of a ranging/SL positioning result. The type of the ranging/SL positioning result includes at least one of an absolute position, a relative position, or a direction.

**In S1b,** UE 1 receives the ranging/SL positioning service request from an application layer.

In some embodiments, UE 1 receives the ranging/SL positioning service request from an RSPP application layer.

In some embodiments, the ranging/SL positioning service request includes identification information of the SL positioning client.

In some embodiments, the ranging/SL positioning service request further includes at least one of an application layer ID of candidate SL positioning reference UE, user information of the candidate SL positioning reference UE, or a type of a ranging/SL positioning result. The type of the ranging/SL positioning result includes at least one of an absolute position, a relative position, or a direction.

**In S15-1,** UE 1 performs privacy verification. In some embodiments, UE 1 receives the identification information of the SL positioning client UE from the SL positioning client UE. In some embodiments, UE 1 acquires a privacy verification result of UE 1 based on the identification information of the SL positioning client UE and privacy verification information of UE 1. In this case, UE 1 is also referred to as a first UE.

**In S2,** UE 1 discovers UE 2, ..., and UE n. In some embodiments, UE 2, ..., and UE n serve as anchor UEs. For example, UE 2, ..., and UE n are configured to transmit an SL positioning reference signal (SL-PRS) to UE 1, such that UE 1 performs an SL-PRS measurement. Alternatively, UE 1 is configured to transmit an SL-PRS to UE 2, ..., and UE n, such that UE 2, ..., and UE n each perform an SL-PRS measurement.

**In S3,** UE 1 determines a UE-only operation. In some embodiments, in the case where none of UE 1, ..., and UE n is served by an NG-RAN or a server network does not support ranging/SL positioning, it is determined to apply the UE-only operation. In some embodiments, in the case where UE 1, ..., and UE n are in an out-of-coverage (OOC) scenario, the UE-only operation is determined.

**In S4,** UE 1 performs capability exchange with UE 2, ..., and UE n. In some embodiments, S4 is performed during S7 with coordination of the SL positioning server UE.

**In S15-2,** UE 2, ..., and UE n perform privacy verification.

In some embodiments, UE 1 treats UE 2, ..., and UE n as the first UEs, and transmits the identification information of the SL positioning client UE to the first UEs. In some embodiments, UE 1 selects at least one UE from UE 1, UE 2, ..., and UE n as the first UE, and transmits the identification information of the SL positioning client UE to the first UE. In some embodiments, UE 1 transmits the identification information of the SL positioning client UE to the first UE in a unicast, or multicast, or broadcast manner. In some embodiments, a PC5 connection is established between UE 1 and the first UE.

In some embodiments, the first UE acquires a privacy verification result of the first UE based on the identification information of the SL positioning client UE and the privacy verification information of the first UE. In some embodiments, the first UE transmits the privacy verification result to UE 1.

In some embodiments, UE 1 determines whether to proceed with the ranging/SL positioning service based on the privacy verification result of the first UE. In response to determining to proceed with the ranging/SL positioning service, UE 1 transmits identification information of third UEs to the SL positioning server UE. The third UE is a UE whose privacy verification result is the first result, and the first result indicates that the SL positioning client UE is authorized to acquire the privacy data of the first UE. The identification information of the third UEs is carried in a ranging/SL positioning service request transmitted to the SL positioning server UE. The specific implementation process of "determining whether to proceed with the ranging/SL positioning service based on the privacy verification result of the first UE" is illustrated in S430, and is not repeated herein.

**In S5a,** UE 1 discovers and selects an SL positioning server UE.

In some embodiments, UE 1 supports an SL positioning service function, and UE 1 serves as the SL positioning server UE.

In some embodiments, in the case where UE 1 does not support the SL positioning service function, UE 1 discovers and selects an SL positioning server UE. The SL positioning server UE is a UE in UE 2, ..., and UE n, or is another UE. UE 1 discovers and selects the SL positioning server UE from target UEs or SL positioning reference UEs that have already undergone the discovery process, or UE 1 discovers an SL positioning server UE that supports the SL positioning service function.

In some embodiments, in the case where the SL positioning server UE is a UE in UE 2, ..., and UE n or another UE, UE 1 discovers and selects the SL positioning server UE, and requests the SL positioning server UE to participate in ranging/SL positioning.

**In S5b,** UE 1 establishes a PC5 connection with the SL positioning server UE.

**In S6,** UE 1 transmits a ranging/SL positioning service request via PC5.

In some embodiments, the ranging/SL positioning service request includes identification information of the SL positioning client. In some embodiments, the ranging/SL positioning service request further includes at least one of an application layer ID of the candidate SL positioning reference UE, user information of the candidate SL positioning reference UE, or a type of a ranging/SL positioning result. The type of the ranging/SL positioning result includes at least one of an absolute position, a relative position, or a direction.

In some embodiments, the ranging/SL positioning service request includes identification information of third UEs, the identification information of each of the third UEs is used for the SL positioning server UE or the LMF to determine whether the each of the third UEs participates in the ranging/SL positioning service; or the ranging/SL positioning service request includes capability information of the third UEs, and the capability information of each of the third UEs and the identification information of the each of the third UEs are used for the SL positioning server UE or the LMF to determine whether the each of the third UEs participates in the ranging/SL positioning service. The capability information is acquired by UE 1 based on S4. The identification information of the third UEs is illustrated in S440, and is not repeated herein.

**In S7,** capability request and response of UE 1 to UE n are performed between the SL positioning server UE and UE 1. In some embodiments, the SL positioning server UE transmits capability requests of UE 1, UE 2, ..., and UE n to UE 1; and UE 1 transmits capability responses of UE 1, UE 2, ..., and UE n to the SL positioning server UE.

**In S8a,** the SL positioning server UE provides SL positioning assistance data to UE 1. **In S8b,** UE 1 completes delivers the SL positioning assistance data to UE 2, ..., and UE n. **In S9,** the SL positioning server UE requests SL measurement information of UE 1, UE 2, ..., and UE n from UE 1.

**In S10,** an SL-PRS is measured. In some embodiments, the SL-PRS is measured between UE 1 and UE 2, ..., and UE n. In some embodiments, the SL-PRS is measured among UE 2, ..., and UE n. **In S11,** UE 1 provides the SL measurement information to the SL positioning server UE.

**In S12,** the SL positioning server UE performs result calculation.

In some embodiments, UE 1, and/or UE 2, ..., and UE n transmit the SL-PRS measurement data to the SL positioning server UE. The SL positioning server UE calculates a ranging/SL positioning result and transmits the ranging/SL positioning result to UE 1. Based on the result type received in S1 or S6, the SL positioning server UE calculates an absolute position, a relative position, or ranging information.

In some embodiments, in the case where UE 1 supports a functionality of an SL positioning server UE, UE 2, ..., and UE n transmit the SL-PRS measurement data to UE 1, and UE 1 calculates the ranging/SL positioning result . Based on the result type received in S1 or S6, UE 1 calculates an absolute position, a relative position, or ranging information.

In some embodiments, UE 1 transmits an SL-PRS to UE 2, ..., and UE n, and UE 2, ..., and UE n measure the SL-PRS. UE 2, ..., and UE n transmit SL-PRS measurement data to the SL positioning server UE. The SL positioning server UE positions UE 2, ..., and UE n based on the SL-PRS measurement data, and calculates an absolute position, a relative position, or ranging information of UE 1.

**In S13,** the SL positioning server UE performs a ranging/SL positioning service response via PC5. In S14, UE 1 responds to the ranging/SL positioning service request. **In S14a,** UE 1 responds to the ranging/SL positioning service request over PC5. **In S14b,** UE 1 responds to the ranging/SL positioning service request from an application layer.

In some embodiments, S15-1 is performed between S2 and S3; S15-1 is performed between S3 and S4; S15-1 is performed between S4 and S5a; S15-1 is performed between S5a and S5b; S15-1 is performed between S5b and S6; S15-2 is performed between S2 and S3; S15-2 is performed between S3 and S4; S15-2 is performed between S4 and S5a; S15-2 is performed between S5a and S5b; or S15-2 is performed between S5b and S6.

In summary, in the method according to the embodiments of the present disclosure, the illustrated privacy verification process is performed on the basis of the ranging/SL positioning procedure in some practices. The first UE performs the privacy verification to ensure the security of the privacy verification process, and the existing flow is used in the method utilizes, such that the protocol impact is reduced.

In some embodiments, in the UE-only operation scenario, since the SL positioning server UE calculates the result, as illustrated in S9 to S12 in FIG. 10, the SL positioning server UE needs to acquire privacy data of UEs participating in the ranging/SL positioning service to calculate the result. Therefore, in addition to determining whether the SL positioning client UE is authorized to acquire the privacy data of the UEs, it is also necessary to determine whether the SL positioning server UE is authorized to acquire the privacy data of the UEs.

That is, it can be understood that a UE authorized to acquire the privacy data of the first UE is determined as the SL positioning server UE. Alternatively, after the SL positioning server UE is selected, privacy verification is performed on the SL positioning server UE to determine whether the SL positioning server UE is authorized to acquire the privacy data of the first UE. In general, the SL positioning server UE is determined using any one of the following three methods.

In a first determination method, the SL positioning server UE is determined based on a privacy verification result of a target UE for a candidate UE.

In a second determination method, the SL positioning server UE is determined based on a privacy profile of a candidate UE.

In a third determination method, the SL positioning server UE is determined based on privacy verification results of a target UE and an SL positioning reference UE for a candidate UE.

The privacy profile of the candidate UE is also referred to as a profile, a UE profile, or a UE configuration file. The privacy profile of the candidate UE is used to indicate a role of the candidate UE in the ranging/SL positioning service, that is, a role of the candidate UE in the ranging/SL positioning service. The role includes at least one of the SL positioning client UE, the target UE, the SL positioning reference UE, or the SL positioning server UE. For example, the privacy profile of the candidate UE indicates that the role type of the candidate UE includes the SL positioning target UE and the SL positioning server UE. In the case where the privacy profile of the candidate UE indicates that the candidate UE serves as the SL positioning server UE, the candidate UE acquires privacy data of other UEs, and the UE is directly determined as the SL positioning server UE without privacy verification.

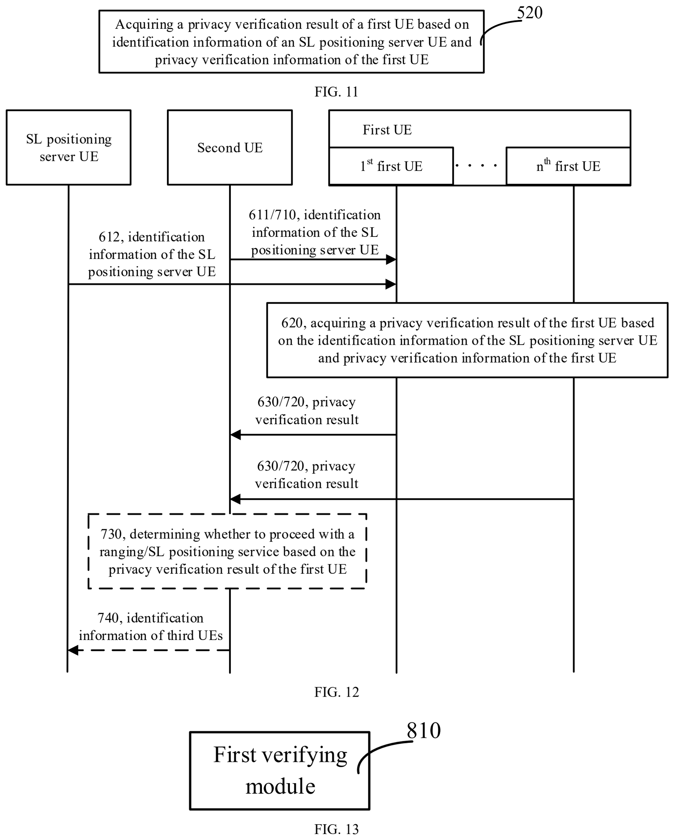

For both the first determination method and the third determination method, privacy verification needs to be performed on the SL positioning server UE, and the method for privacy verification is illustrated hereinafter. FIG. 11 is a flowchart of a method for privacy verification according to some exemplary embodiments of the present disclosure. The method is performed by a first UE, and the method includes the following process.

**In S520,** a privacy verification result of the first UE is acquired based on identification information of an SL positioning server UE and privacy verification information of the first UE, wherein the privacy verification result is used to indicate whether the SL positioning server UE is authorized to acquire privacy data of the first UE.

In some embodiments, the privacy verification information is stored in the first UE.

In some embodiments, the first UE performs the privacy verification based on the identification information of the SL positioning server UE and the privacy verification information stored in the first UE to acquire the privacy verification result of the first UE. In some embodiments, the privacy verification result is used to indicate whether the SL positioning server UE is authorized to acquire the privacy data of the first UE. That is, the privacy verification result is used to indicate whether the first UE allows to expose the privacy data of the first UE to the SL positioning server UE. That is, the privacy verification result is used to indicate whether the first UE allows the SL positioning server UE to acquire the privacy data of the first UE.

In summary, the method according to the embodiments of the present disclosure illustrates the process of the first UE performing the privacy verification. That is, the privacy verification result of the first UE is acquired by performing the privacy verification based on the identification information of the SL positioning server UE and the privacy verification information of the first UE. In the method, the first UE performs the determination based on its own privacy verification information, such that the privacy verification is performed, exposure of the privacy verification information of the first UE is avoided, and the security of the privacy verification process is improved.

FIG. 12 is a flowchart of a method for privacy verification according to some exemplary embodiments of the present disclosure. The method is performed by a first UE, and the method includes the following processes. In some embodiments, S611 and S612 are parallel processes, and only S611 or S612 is performed for the first UE to receive identification information of an SL positioning server UE.

**In S611,** the identification information of the SL positioning server UE from a second UE is received.

In some embodiments, privacy verification information is stored in the first UE.

In some embodiments, a PC5 connection exists between the first UE and the second UE, and the first UE receives the identification information of the SL positioning server UE from the second UE via the PC5 connection.

In some embodiments, no PC5 connection exists between the first UE and the second UE, and the first UE establishes a PC5 connection with the second UE and then receives the identification information of the SL positioning server UE from the second UE via the PC5 connection.

**In S612,** the identification information of the SL positioning server UE from the SL positioning server UE is received.

In some embodiments, the first UE is a target UE, a PC5 connection exists between the first UE and the SL positioning server UE, and the first UE receives the identification information of the SL positioning server UE from the SL positioning server UE via the PC5 connection.

In some embodiments, the first UE is the target UE, no PC5 connection exists between the first UE and the SL positioning client UE, and the first UE establishes a PC5 connection with the SL positioning client UE and then receives the identification information of the SL positioning client UE from the second UE via the PC5 connection.

**In S620,** a privacy verification result of the first UE is acquired based on the identification information of the SL positioning server UE and the privacy verification information of the first UE.

The privacy verification result is used to indicate whether the SL positioning client UE is authorized to acquire privacy data of the first UE.

In some embodiments, the execution process of S620 is similar to that of S520, and is not repeated herein.

**In S630,** the privacy verification result is transmitted to the second UE.

In some embodiments, a PC5 connection exists between the first UE and the second UE, and the first UE transmits the privacy verification result to the second UE via the PC5 connection. Alternatively, no PC5 connection exists between the first UE and the second UE, and the first UE establishes a PC5 connection with the second UE and then transmits the privacy verification result to the second UE via the PC5 connection.

In some embodiments, the first UE transmits the privacy verification result to the second UE.

In some embodiments, the first UE includes n first UEs. n is a positive integer. The privacy verification results of the n first UEs are used for the second UE to determine whether to proceed with the ranging/SL positioning service. The determination of the second UE on whether to proceed with the ranging/SL service includes at least one of: determining, by the second UE, to transmit a ranging/SL positioning service request to the SL positioning server UE in the case where the privacy verification results of the n first UEs are all the first result, wherein the first result indicates that the SL positioning client UE is authorized to acquire the privacy data of the n first UEs; determining, by the second UE, to transmit a ranging/SL positioning service rejection message to the SL positioning client UE in the case where the privacy verification results of the n first UEs are all the second result, wherein the second result indicates that the SL positioning client UE is not authorized to acquire the privacy data of the n first UEs; or determining, by the second UE, to determine a processing mode according to a privacy verification rule in the case where the privacy verification results of a part of the n first UEs are the first result.

In some embodiments, the processing mode includes at least one of: transmitting the ranging/SL positioning service request to the SL positioning server UE, or transmitting the ranging/SL positioning service rejection message to the SL positioning client UE.

In some embodiments, the privacy verification rule is provided by an application layer of the second UE, or the privacy verification rule is transmitted by the SL positioning client UE to the second UE.

In some embodiments, the first UE whose privacy verification result is the first result is referred to as the third UE, that is, the n first UEs include m third UEs. The privacy verification results of the m third UEs are all the first result. m is a positive integer and m≤n. The ranging/SL positioning service request includes pieces of identification information of the m third UEs, and each of the m third UEs corresponds to one of the pieces of identification information. In some embodiments, the identification information of the third UE includes at least one of: user information of the third UE, or an application layer ID of the third UE.

In some embodiments, the identification information of each of the m third UEs is used for the SL positioning server UE to determine whether the each of the m third UEs participates in the ranging/SL positioning service; or the ranging/SL positioning service request further includes capability information of the m third UEs, and the capability information of each of the m third UEs and the identification information of the each of the m third UEs are used for the SL positioning server UE to determine whether the each of the m third UEs participates in the ranging/SL positioning service.

In summary, in the method according to the embodiments of the present disclosure, a source of the identification information of the SL positioning server UE in the privacy verification process is illustrated. That is, the identification information is transmitted by the second UE or the SL positioning server UE. The necessary information for the privacy verification is provided to the first UE in method, such that the first UE successfully performs the privacy verification. In addition, the processing mode of the privacy verification result is illustrated. That is, the privacy verification result is transmitted to the second UE, and the second UE determines whether to proceed with the ranging/SL positioning service based on the privacy verification result, transmits the ranging/SL positioning service request to the SL positioning server UE in response to determining to proceed with the ranging/SL positioning service, and informs the SL positioning client UE of the rejection of the ranging/SL positioning service in response to determining not to proceed with the ranging/SL positioning service, such that the privacy verification in the ranging/SL positioning service process is performed in the case where the privacy data of the first UE is not exposed. Further, how to further determine the first UEs participating in the ranging/SL positioning service on the basis of proceeding with the ranging/SL positioning service is illustrated. That is, the identification information of the third UEs determined to allow the exposure of the privacy data is transmitted to the SL positioning server UE. The SL positioning server UE selects the UES participating in the ranging/SL positioning service, such that the ranging/SL positioning service process based on privacy verification is achieved.

FIG. 12 is a flowchart of a method for privacy verification according to some exemplary embodiments of the present disclosure. The method is performed by a second UE, and the method includes the following processes.

**In S710,** identification information of an SL positioning server UE is transmitted to a first UE, wherein the first UE is configured to acquire a privacy verification result of the first UE based on the identification information of the SL positioning server UE and privacy verification information of the first UE, and the privacy verification result is used to indicate whether the SL positioning server UE is authorized to acquire privacy data of the first UE.

In some embodiments, a PC5 connection exists between the first UE and the second UE, and the second UE transmits the identification information of the SL positioning server UE to the first UE via the PC5 connection. Alternatively, no PC5 connection exists between the first UE and the second UE, and the second UE t establishes a PC5 connection with the first UE and then transmits the identification information of the SL positioning server UE to the first UE via the PC5 connection.

In some embodiments, in the case where the second UE has pre-acquired the identification information of the SL positioning server UE or the second UE has stored the identification information of the SL positioning server UE, the second UE transmits the identification information of the SL positioning server UE to the first UE. Alternatively, in the case where the second UE has not pre-acquired the identification information of the SL positioning server UE, the second UE acquires the identification information of the SL positioning server UE and then transmits the identification information of the SL positioning server UE to the first UE.

In some embodiments, the privacy verification result is used to indicate whether the SL positioning server UE is authorized to acquire the privacy data of the first UE. That is, the privacy verification result is used to indicate whether the first UE allows to expose the privacy data of the first UE to the SL positioning server UE. That is, the privacy verification result is used to indicate whether the first UE allows the SL positioning server UE to acquire the privacy data of the first UE. That is, the privacy verification result is used to indicate whether the first UE agrees to participate in a ranging/SL positioning service of the SL positioning server UE.

In some embodiments, the second UE transmits the identification information of the SL positioning server UE to UEs that may participate in the ranging/SL positioning service, that is, the second UE transmits the identification information of the SL positioning server UE to at least one first UE. The first UE is a target UE, an SL positioning reference UE, or a UE with a known position. For example, the at least one UE includes a target UE and other UEs located within a peripheral range of the target UE. The other UEs located within the peripheral range of the target UE are referred to as SL positioning reference UEs, or referred to as candidate SL positioning reference UEs.

In some embodiments, the privacy verification information is stored in the first UE.

**In S720,** the privacy verification result from the first UE is received.

In some embodiments, a PC5 connection exists between the first UE and the second UE, and the second UE receives the privacy verification result from the first UE via the PC5 connection. Alternatively, no PC5 connection exists between the first UE and the second UE, and the second UE establishes a PC5 connection with the first UE and then receives the privacy verification result from the first UE via the PC5 connection.

In some embodiments, the second UE receives the privacy verification result from the at least one first UE, and the privacy verification result of each first UE is used to indicate whether the SL positioning server UE is authorized to acquire the privacy data of the first UE.

**In S730,** whether to proceed with the ranging/SL positioning service is determined based on the privacy verification result of the first UE.

In some embodiments, the first UE includes n first UEs. n is a positive integer. The privacy verification results of the n first UEs are used for the second UE to determine whether to proceed with the ranging/SL positioning service. That is, determining whether to proceed with the ranging/SL positioning service based on the privacy verification result of the first UE includes at least one of: determining to transmit a ranging/SL positioning service request to the SL positioning server UE in the case where the privacy verification results of the n first UEs are all the first result, wherein the first result indicates that the SL positioning server UE is authorized to acquire the privacy data of the n first UEs; determining to transmit a ranging/SL positioning service rejection message to the SL positioning server UE in the case where the privacy verification results of the n first UEs are all the second result, wherein the second result indicates that the SL positioning server UE is not authorized to acquire the privacy data of the n first UEs; or determining a processing mode according to a privacy verification rule in the case where the privacy verification results of a part of the n first UEs are the first result.

In some embodiments, the processing mode includes at least one of: transmitting the ranging/SL positioning service request to the SL positioning server UE, transmitting the ranging/SL positioning service rejection message to the SL positioning server UE, or reselecting the SL positioning server UE.

In some embodiments, the privacy verification rule is provided by an application layer of the second UE, or the privacy verification rule is transmitted by the SL positioning server UE to the second UE. The processing mode and the privacy verification rule are similar to those illustrated in S440, and are not repeated herein. It should be noted that, in response to determining that privacy verification needs to be performed on the SL positioning server UE, a UE-only operation scenario is determined, and a ranging/SL positioning service request is not transmitted to the LMF in the processing mode. Furthermore, since the SL positioning server UE is determined based on the privacy verification result in the "first determination method" and the "third determination method", the SL positioning server UE is reselected in the case where the current SL positioning server UE is not authorized to acquire the privacy data of the first UE, and the privacy verification is reperformed on the new SL positioning server UE. The two aspects differ from the solution illustrated in S440.

**In S740,** identification information of third UEs is transmitted to the SL positioning server UE.

In some embodiments, the first UE whose privacy verification result is the first result is referred to as the third UE, that is, the n first UEs include m third UEs. The privacy verification results of the m third UEs are the first result. The privacy verification results of the m third UEs are the first result. m is a positive integer and m≤n. The ranging/SL positioning service request includes pieces of identification information of the m third UEs, and each of the m third UEs corresponds to one of the pieces of identification information. That is, the second UE selects the third UEs based on the privacy verification results of the first UEs, and acquires the identification information of the third UEs.

In some embodiments, the identification information of the third UE includes at least one of: user information of the third UE, or an application layer ID of the third UE.

In some embodiments, the identification information of each of the m third UEs is used for the SL positioning server UE to determine whether the each of the m third UEs participates in the ranging/SL positioning service; or the ranging/SL positioning service request further includes capability information of the m third UEs, and the capability information of each of the m third UEs and the identification information of the each of the m third UEs are used for the SL positioning server UE to determine whether the each of the m third UEs participates in the ranging/SL positioning service. A method for the SL positioning server UE to determine the third UEs participating in the ranging/SL positioning service has been illustrated in S440, and is not repeated herein.

In summary, in the method according to the embodiments of the present disclosure, the method for the second UE to provide the identification information of the SL positioning client UE for the first UE is illustrated, such that the first UE acquires one of the pieces of necessary information for the privacy verification, and the entire ranging/SL positioning service process including the privacy verification is successfully performed. In addition, the processing mode of the second UE on the privacy verification result transmitted by the first UE is illustrated. The second UE determines whether to proceed with the ranging/SL positioning service based on the privacy verification result, transmits the ranging/SL positioning service request to the SL positioning server UE or the LMF in response to determining to proceed with the ranging/SL positioning service, and informs the SL positioning client UE of the rejection of the ranging/SL positioning service in response to determining not to proceed with the ranging/SL positioning service, such that the privacy verification in the ranging/SL positioning service process is performed in the case where the privacy data of the first UE is not exposed. Further, how to further determine the first UEs participating in the ranging/SL positioning service on the basis of proceeding with the ranging/SL positioning service is illustrated. That is, the identification information of the third UEs determined to allow the exposure of the privacy data is transmitted to the SL positioning server UE or the LMF. The SL positioning server UE or the LMF selects the UEs participating in the ranging/SL positioning service, such that the ranging/SL positioning service process based on privacy verification is achieved.

The opportunity of the privacy verification process for the SL positioning server UE is described herein with reference to FIG. 10. The method includes S1 to S14. S1 to S4 and S5b to S14 are similar to those illustrated in FIG. 10, and are not repeated herein.

**In S5a,** UE 1 discovers and selects an SL positioning server UE.

In some embodiments, upon discovering the SL positioning server UE, UE 1 requests identification information of the SL positioning server UE from the SL positioning server UE for privacy verification of UE 1. In this case, UE 1 is referred to as a first UE and a second UE. In some embodiments, the SL positioning server UE is determined based on a privacy verification result of UE 1. For example, UE 1 discovers two candidate UEs: candidate UE a and candidate UE b. In the case where a privacy verification result of UE 1 for candidate UE a indicates that candidate UE a is authorized to acquire the privacy data of UE 1, candidate UE a is determined as the SL positioning server UE. In the case where the privacy verification result of UE 1 for candidate UE a indicates that candidate UE a is not authorized to acquire the privacy data of UE 1, UE 1 performs privacy verification on candidate UE b. In the case where a privacy verification result of UE 1 for candidate UE b indicates that candidate UE b is not authorized to acquire the privacy verification data of UE 1 either, UE 1 determines to not proceed with the ranging/SL positioning service (as described in the first determination method).

In some embodiments, upon determining the SL positioning server UE, UE 1 transmits the identification information of the SL positioning server UE to the first UEs (i.e., UE 2 to UE n). UE 2 to UE n perform privacy verification on the SL positioning server UE. UE 1 acquires privacy verification results of UE 2 to UE n for the SL positioning server UE, and determines whether to proceed with the ranging/SL positioning service.

In some embodiments, in the case where the privacy verification results of UE 2 to UE n all indicate that the SL positioning server UE is not authorized to acquire the privacy data of UE 2 to UE n, the SL positioning server UE is reselected. Alternatively, in the case where the privacy verification results of a part of UEs in UE 2 to UE n indicate that the SL positioning server UE is authorized to acquire the privacy data of UE 2 to UE n, the SL positioning server UE is reselected (as described in the second determination method).

In summary, in the method according to the embodiments of the present disclosure illustrates the timing of privacy verification of the first UE for the SL positioning server UE, such that the SL positioning server UE for calculating the ranging/SL positioning service is authorized to acquire the privacy data of the first UE, the privacy data of the first UE is not exposed, and privacy security in the ranging/SL positioning service is improved.

It should be noted that the above descriptions separately illustrate that the second UE determines whether to proceed with the ranging/SL positioning service based on the privacy verification result upon the privacy verification for the SL positioning client UE and the privacy verification for the SL positioning server UE. A brief description is provided on how the second UE determines whether to proceed with the ranging/SL positioning service based on privacy verification results in the case where privacy verification needs to be performed on both the SL positioning client UE and the SL positioning server UE. Since the scenario in which privacy verification needs to be performed on the SL positioning server UE is a UE-only operation scenario, the LMF does not select UEs participating in the ranging/SL positioning service.

In the case where the privacy verification results of the n first UEs for the SL positioning client UE are all the first result and the privacy verification results of the n first UEs for the SL positioning server UE are all the first result, a ranging/SL positioning service request is transmitted to the SL positioning server UE. In the case where the privacy verification results of the n first UEs for the SL positioning client UE are all the second result and the privacy verification results of the n first UEs for the SL positioning server UE are all the first result, a ranging/SL positioning service rejection message is transmitted to the SL positioning client UE. In the case where the privacy verification results of the n first UEs for the SL positioning client UE are all the first result and the privacy verification results of the n first UEs for the SL positioning server UE are all the second result, the ranging/SL positioning service rejection message is transmitted to the SL positioning client UE. In the case where the privacy verification results of the n first UEs for the SL positioning client UE are all the first result and the privacy verification results of the n first UEs for the SL positioning server UE are all the second result, the SL positioning server UE is reselected. In the case where the privacy verification results of the n first UEs for the SL positioning client UE are all the second result and the privacy verification results of the n first UEs for the SL positioning server UE are all the second result, the ranging/SL positioning service rejection message is transmitted to the SL positioning client UE. In the case where the privacy verification results of a part of the n first UEs for the SL positioning client UE are the first result and the privacy verification results of the n first UEs for the SL positioning server UE are all the first result, a processing mode is determined according to a privacy verification rule. In the case where the privacy verification results of a part of the n first UEs for the SL positioning client UE are the first result and the privacy verification results of the n first UEs for the SL positioning server UE are all the second result, a processing mode is determined according to a privacy verification rule. In the case where the privacy verification results of a part of the n first UEs for the SL positioning client UE are the first result and the privacy verification results of a part of the n first UEs for the SL positioning server UE are the first result, a processing mode is determined according to a privacy verification rule.

FIG. 13 is a structural block diagram of a first apparatus according to some exemplary embodiments of the present disclosure. The apparatus may be practiced as a first UE or a part of the first UE by software, hardware, or a combination thereof. The apparatus includes the following modules.

**A first verifying module 810 is configured to** acquire a privacy verification result of the first apparatus based on identification information of an SL positioning client UE and privacy verification information of the first apparatus.

The privacy verification result is used to indicate whether the SL positioning client UE is authorized to acquire privacy data of the first apparatus. In some embodiments, the privacy verification information is stored in the first apparatus.

In some embodiments, the first verifying module 810 is configured to perform the privacy verification based on the identification information of the SL positioning client UE and the privacy verification information stored in the first apparatus to acquire the privacy verification result of the first apparatus.

In some embodiments, the privacy verification result is used to indicate whether the SL positioning client UE is authorized to acquire the privacy data of the first apparatus. That is, the privacy verification result is used to indicate whether the first apparatus allows to expose the privacy data of the first apparatus to the SL positioning client UE. That is, the privacy verification result is used to indicate whether the first apparatus allows the SL positioning client UE to acquire the privacy data of the first apparatus. That is, the privacy verification result is used to indicate whether the first apparatus agrees to participate in a ranging/SL positioning service of the SL positioning client UE.

In some optional embodiments based on FIG. 13, the apparatus further includes a first receiving module. **The first receiving module is configured to** receive the identification information of the SL positioning client UE from a second UE.

In some embodiments, the privacy verification information is stored in the first apparatus.

In some optional embodiments based on FIG. 13, the apparatus further includes a first receiving module. **The first receiving module is further configured to** receive the identification information of the SL positioning client UE from the SL positioning client UE.

In some optional embodiments based on FIG. 13, **the first verifying module 810 is further configured to** acquire the privacy verification result of the first apparatus based on the identification information of the SL positioning client UE and the privacy verification information of the first apparatus.

The privacy verification result is used to indicate whether the SL positioning client UE is authorized to acquire the privacy data of the first apparatus.

In some optional embodiments based on FIG. 13, the apparatus further includes a first transmitting module. **The first transmitting module is configured to** transmit the privacy verification result to the second UE.

In some embodiments, **the first transmitting module is configured to** transmit the privacy verification result to the second UE.

In some embodiments, the first apparatus includes n first apparatuses, where n is a positive integer. The privacy verification results of the n first apparatuses are used for the second UE to determine whether to proceed with the ranging/SL positioning service. The second UE determines to transmit a ranging/SL positioning service request to an SL positioning server UE in the case where the privacy verification results of the n first apparatuses are all a first result, wherein the first result indicates that the SL positioning client UE is authorized to acquire the privacy data of the n first apparatuses. The second UE determines to transmit the ranging/SL positioning service request to an LMF in the case where the privacy verification results of the n first apparatuses are all the first result. The second UE determines to transmit a ranging/SL positioning service rejection message to the SL positioning client UE in the case where the privacy verification results of the n first apparatuses are all a second result, wherein the second result indicates that the SL positioning client UE is not authorized to acquire the privacy data of the n first apparatuses. The second UE determines a processing mode according to a privacy verification rule in the case where the privacy verification results of a part of the n first apparatuses are the first result.

In some embodiments, the processing mode includes at least one of: transmitting the ranging/SL positioning service request to the SL positioning server UE, transmitting the ranging/SL positioning service request to the LMF, or transmitting the ranging/SL positioning service rejection message to the SL positioning client UE.

In some embodiments, the privacy verification rule is provided by an application layer of the second UE, or the privacy verification rule is transmitted by the SL positioning client UE to the second UE. The privacy verification rule is used to instruct the second UE to determine the processing mode. The privacy verification rule is related to at least one of the privacy verification results of the n first apparatuses or requirements of the ranging/SL positioning service.

In some embodiments, the first apparatuses whose privacy verification results are the first result are referred to as third UEs, that is, the n first apparatuses include m third UEs, the privacy verification results of the m third UEs are the first results, m is a positive integer and m≤n, the ranging/SL positioning service request includes pieces of identification information of the m third UEs, and each of the m third UEs corresponds to one of the pieces of identification information. In some embodiments, the identification information of the third UE includes at least one of: user information of the third UE, or an application layer ID of the third UE. That is, in the case where the second UE determines to proceed with the ranging/SL positioning service, the ranging/SL positioning service request transmitted by the second UE to the SL positioning server UE or the LMF includes the identification information of all or a part of the m third UEs.

In some embodiments, the identification information of each of the m third UEs is used for the SL positioning server UE or the LMF to determine whether the each of the m third UEs participates in the ranging/SL positioning service; or the ranging/SL positioning service request further includes capability information of the m third UEs, and the capability information of each of the m third UEs and the identification information of the each of the m third UEs are used for the SL positioning server UE or the LMF to determine whether the each of the m third UEs participates in the ranging/SL positioning service.

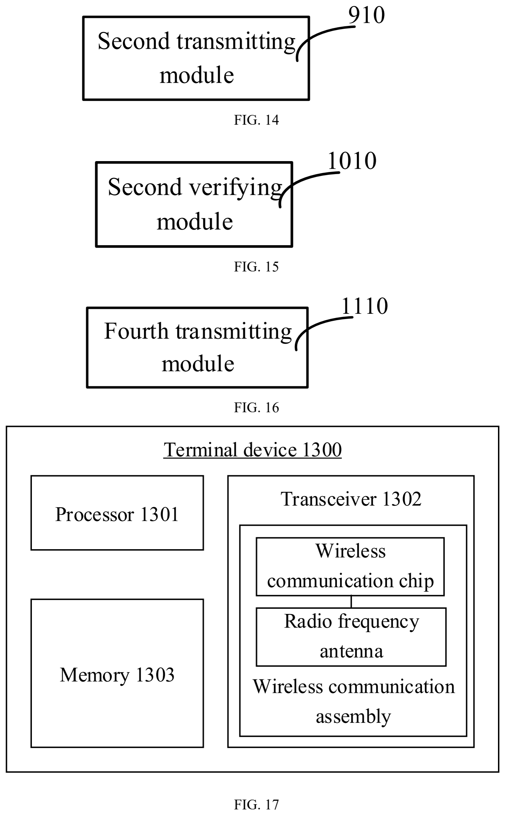

FIG. 14 is a structural block diagram of a second apparatus according to some exemplary embodiments of the present disclosure. The apparatus may be practiced as a second UE or a part of the second UE by software, hardware, or a combination thereof. The apparatus includes the following processes.

**A second transmitting module 910 is configured to** transmit identification information of an SL positioning client UE to a first UE.

The first UE is configured to acquire a privacy verification result of the first UE based on the identification information of the SL positioning client UE and privacy verification information of the first UE, and the privacy verification result is used to indicate whether the SL positioning client UE is authorized to acquire privacy data of the first UE.

In some embodiments, a PC5 connection exists between the first UE and the second apparatus. **The second transmitting module 910 is configured to** transmit the identification information of the SL positioning client UE to the first UE via the PC5 connection. In some embodiments, no PC5 connection exists between the first UE and the second apparatus, and the second apparatus establishes a PC5 connection with the first UE. **The second transmitting module 910 is configured to** transmit the identification information of the SL positioning client UE to the first UE via the PC5 connection.

In some embodiments, in the case where the second apparatus has pre-acquired the identification information of the SL positioning client UE or the second apparatus has stored the identification information of the SL positioning client UE, the second apparatus transmits the identification information of the SL positioning client UE to the first UE. Alternatively, in the case where the second apparatus has not pre-acquired the identification information of the SL positioning client UE, the second apparatus acquires the identification information of the SL positioning client UE and then transmits the identification information of the SL positioning client UE to the first UE.

In some embodiments, the privacy verification result is used to indicate whether the SL positioning client UE is authorized to acquire the privacy data of the first UE. That is, the privacy verification result is used to indicate whether the first UE allows to expose the privacy data of the first UE to the SL positioning client UE. That is, the privacy verification result is used to indicate whether the first UE allows the SL positioning client UE to acquire the privacy data of the first UE. That is, the privacy verification result is used to indicate whether the first UE agrees to participate in a ranging/SL positioning service of the SL positioning client UE.

In some embodiments, **the second transmitting module 910 is configured to** transmit the identification information of the SL positioning client UE to UEs that may participate in the ranging/SL positioning service, that is, **the second transmitting module 910 is configured to** transmit the identification information of the SL positioning client UE to at least one first UE. The first UE is a target UE, an SL positioning reference UE, or a UE with a known position. For example, the at least one UE includes a target UE and other UEs located within a peripheral range of the target UE. The other UEs located within the peripheral range of the target UE are referred to as the SL positioning reference UE, or the candidate SL positioning reference UE. In some embodiments, the privacy verification information is stored in the first UE.

In some embodiments, the apparatus further includes a second receiving module. **The second receiving module is configured to** receive the privacy verification result from the first UE.

In some embodiments, a PC5 connection exists between the first UE and the second apparatus. The first receiving module is configured to receive the privacy verification result from the first UE via the PC5 connection. In some embodiments, no PC5 connection exists between the first UE and the second apparatus, and the second apparatus establishes a PC5 connection with the first UE. The first receiving module is configured to receive the privacy verification result from the first UE via the PC5 connection.

In some embodiments, the first receiving module is configured to receive the privacy verification result from the at least one first UE, wherein the privacy verification result of each first UE is used to indicate whether the SL positioning client UE is authorized to acquire the privacy data of the first UE.

In some embodiments, the apparatus further includes a first determining module. **The first determining module is configured to** determine whether to proceed with the ranging/SL positioning service based on the privacy verification result of the first UE.

In some embodiments, the first UE includes n first UEs, wherein n is a positive integer. The privacy verification results of the n first UEs are used for the second apparatus to determine whether to proceed with the ranging/SL positioning service. That is, **the first determining module is further configured to:** determine to transmit a ranging/SL positioning service request to an SL positioning server UE in the case where the privacy verification results of the n first UEs are all a first result, wherein the first result indicates that the SL positioning client UE is authorized to acquire the privacy data of the n first UEs; determine to transmit the ranging/SL positioning service request to an LMF in the case where the privacy verification results of the n first UEs are all the first result; determine to transmit a ranging/SL positioning service rejection message to the SL positioning client UE in the case where the privacy verification results of the n first UEs are all a second result, wherein the second result indicates that the SL positioning client UE is not authorized to acquire the privacy data of the n first UEs; and determine a processing mode according to a privacy verification rule in the case where the privacy verification results of a part of the n first UEs are the first result.

For example, in a UE-only operation scenario, in the case where the privacy verification results of the n first UEs are all the first result, the second apparatus determines to transmit the ranging/SL positioning service request to the SL positioning server UE. In a network-based operation scenario, in the case where the privacy verification results of the n first UEs are all the first result, the second apparatus determines to transmit the ranging/SL positioning service request to the LMF.

In some embodiments, the processing mode includes at least one of: transmitting the ranging/SL positioning service request to the SL positioning server UE, transmitting the ranging/SL positioning service request to the LMF, or transmitting the ranging/SL positioning service rejection message to the SL positioning client UE.

In some embodiments, the privacy verification rule is provided by an application layer of the second apparatus, or the privacy verification rule is transmitted by the SL positioning client UE to the second apparatus.

In some embodiments, **the first determining module is further configured to** transmit identification information of third UEs to the SL positioning server UE/LMF.

In some embodiments, the first UE whose privacy verification result is the first result is referred to as the third UE, that is, the n first UEs include m third UEs. The privacy verification results of the m third UEs are the first result. m is a positive integer and m≤n. The ranging/SL positioning service request includes pieces of identification information of the m third UEs, and each of the m third UEs corresponds to one of the pieces of identification information. That is, the second apparatus selects the third UEs based on the privacy verification results of the first UEs, and acquires the identification information of the third UEs.

In some embodiments, the identification information of the third UE includes at least one of: user information of the third UE, or an application layer ID of the third UE.

In some embodiments, the identification information of each of the m third UEs is used for the SL positioning server UE or the LMF to determine whether each of the m third UEs participates in the ranging/SL positioning service; or the ranging/SL positioning service request further includes capability information of the m third UEs, and the capability information of each of the m third UEs and the identification information of the each of the m third UEs are used for the SL positioning server UE or the LMF to determine whether the each of the m third UEs participates in the ranging/SL positioning service.

In some embodiments, in a UE-only operation scenario, a PC5 connection exists between the SL positioning server UE and the second apparatus; and in a network-based operation scenario, the LMF is connected to the second apparatus over an N1 interface.

FIG. 15 is a structural block diagram of a third apparatus according to some exemplary embodiments of the present disclosure. The apparatus may be practiced as a first UE or a part of the first UE by software, hardware, or a combination thereof. The apparatus includes the following modules.

**A second verifying module 1010 is configured to** acquire a privacy verification result of the third apparatus based on identification information of an SL positioning server UE and privacy verification information of the third apparatus. The privacy verification result is used to indicate whether the SL positioning server UE is authorized to acquire privacy data of the third apparatus. In some embodiments, the privacy verification information is stored in the third apparatus.

In some embodiments, the third apparatus performs the privacy verification based on the identification information of the SL positioning server UE and the privacy verification information stored in the third apparatus to acquire the privacy verification result of the third apparatus. In some embodiments, the privacy verification result is used to indicate whether the SL positioning server UE is authorized to acquire the privacy data of the third apparatus. That is, the privacy verification result is used to indicate whether the third apparatus allows to expose the privacy data of the third apparatus to the SL positioning server UE. That is, the privacy verification result is used to indicate whether the third apparatus allows the SL positioning server UE to acquire the privacy data of the third apparatus.

In some optional embodiments based on FIG. 15, the apparatus further includes a third receiving module. The **third receiving module is configured to** receive the identification information of the SL positioning server UE from a second UE.

In some embodiments, the privacy verification information is stored in the third apparatus.

In some embodiments, a PC5 connection exists between the third apparatus and the second UE, and the third apparatus receives the identification information of the SL positioning server UE from the second UE via the PC5 connection.

In some embodiments, no PC5 connection exists between the third apparatus and the second UE, and the third apparatus establishes a PC5 connection with the second UE and then receives the identification information of the SL positioning server UE from the second UE via the PC5 connection.

In some optional embodiments based on FIG. 15, the apparatus further includes a third receiving module. **The third receiving module is further configured to** receive the identification information of the SL positioning server UE from the SL positioning server UE.

In some embodiments, the third apparatus is a target UE, a PC5 connection exists between the third apparatus and the SL positioning server UE, and the third apparatus receives the identification information of the SL positioning server UE from the SL positioning server UE via the PC5 connection.

In some embodiments, the third apparatus is the target UE, no PC5 connection exists between the third apparatus and the SL positioning client UE, and the third apparatus establishes a PC5 connection with the SL positioning client UE and then receives the identification information of the SL positioning client UE from the second UE via the PC5 connection.

In some optional embodiments based on FIG. 15, **the second verifying module 1010 is further configured to** acquire the privacy verification result of the third apparatus based on the identification information of the SL positioning server UE and the privacy verification information of the third apparatus.

The privacy verification result is used to indicate whether the SL positioning client UE is authorized to acquire the privacy data of the third apparatus.

In some embodiments, the use process of the second verifying module is similar to that of the first verifying module described above, and is not repeated herein.

In some optional embodiments based on FIG. 15, the apparatus further includes a third transmitting module. **The third transmitting module is configured to** transmit the privacy verification result to the second UE.

In some embodiments, a PC5 connection exists between the third apparatus and the second UE, and the third apparatus transmits the privacy verification result to the second UE via the PC5 connection. Alternatively, no PC5 connection exists between the third apparatus and the second UE, and the third apparatus establishes a PC5 connection with the second UE and then transmits the privacy verification result to the second UE via the PC5 connection.

In some embodiments, **the third transmitting module is configured to** transmit the privacy verification result to the second UE.

In some embodiments, the third apparatus includes n third apparatuses, wherein n is a positive integer. The privacy verification results of the n third apparatuses are used for the second UE to determine whether to proceed with the ranging/SL positioning service. The second UE determines to transmit a ranging/SL positioning service request to the SL positioning server UE in the case where the privacy verification results of the n third apparatuses are all a first result, wherein the first result indicates that the SL positioning client UE is authorized to acquire the privacy data of the n third apparatuses. The second UE determines to transmit a ranging/SL positioning service rejection message to the SL positioning client UE in the case where the privacy verification results of the n third apparatuses are all a second result, wherein the second result indicates that the SL positioning client UE is not authorized to acquire the privacy data of the n third apparatuses. The second UE determines a processing mode according to a privacy verification rule in the case where the privacy verification results of a part of the n third apparatuses are the first result.

In some embodiments, the processing mode includes at least one of: transmitting the ranging/SL positioning service request to the SL positioning server UE, or transmitting the ranging/SL positioning service rejection message to the SL positioning client UE.

In some embodiments, the privacy verification rule is provided by an application layer of the second UE, or the privacy verification rule is transmitted by the SL positioning client UE to the second UE.

In some embodiments, the third apparatuses whose privacy verification results are the first results are referred to as third UEs, that is, the n third apparatuses include m third UEs, the privacy verification results of the m third UEs are the first results, m is a positive integer and m≤n, the ranging/SL positioning service request includes pieces of identification information of the m third UEs, and each of the m third UEs corresponds to one of the pieces of identification information. In some embodiments, the identification information of the third UE includes at least one of: user information of the third UE, or an application layer ID of the third UE.

In some embodiments, the identification information of each of the m third UEs is used for the SL positioning server UE to determine whether the each of the m third UEs participates in the ranging/SL positioning service; or the ranging/SL positioning service request further includes capability information of the m third UEs, and the capability information of each of the m third UEs and the identification information of the each of the m third UEs are used for the SL positioning server UE to determine whether the each of the m third UEs participates in the ranging/SL positioning service.

FIG. 16 is a structural block diagram of a fourth apparatus according to some exemplary embodiments of the present disclosure. The apparatus may be implemented as a second UE or a part of the second UE by software, hardware, or a combination thereof. The apparatus includes the following modules:

**A fourth transmitting module 1110 is configured to** transmit identification information of an SL positioning server UE to a first UE.

The first UE is configured to acquire a privacy verification result of the first UE based on the identification information of the SL positioning server UE and privacy verification information of the first UE, and the privacy verification result is used to indicate whether the SL positioning server UE is authorized to acquire privacy data of the first UE.

In some embodiments, a PC5 connection exists between the first UE and the fourth apparatus. **The fourth transmitting module 1110 is configured to** transmit the identification information of the SL positioning server UE to the first UE via the PC5 connection. Alternatively, no PC5 connection exists between the first UE and the fourth apparatus. **The fourth transmitting module 1110 is configured to** establish a PC5 connection with the first UE, and then transmit the identification information of the SL positioning server UE to the first UE via the PC5 connection.

In some embodiments, in the case where the fourth apparatus has pre-acquired the identification information of the SL positioning server UE or the fourth apparatus has stored the identification information of the SL positioning server UE, the fourth apparatus transmits the identification information of the SL positioning server UE to the first UE. Alternatively, in the case where the fourth apparatus has not pre-acquired the identification information of the SL positioning server UE, the fourth apparatus acquires the identification information of the SL positioning server UE, and then transmits the identification information of the SL positioning server UE to the first UE.

In some embodiments, the privacy verification result is used to indicate whether the SL positioning server UE is authorized to acquire the privacy data of the first UE. That is, the privacy verification result is used to indicate whether the first UE allows to expose the privacy data of the first UE to the SL positioning server UE. That is, the privacy verification result is used to indicate whether the first UE allows the SL positioning server UE to acquire the privacy data of the first UE. That is, the privacy verification result is used to indicate whether the first UE agrees to participate in a ranging/SL positioning service of the SL positioning server UE.

In some embodiments, **the fourth transmitting module 1110 is configured to** transmit the identification information of the SL positioning server UE to UEs that may participate in the ranging/SL positioning service, that is, **the fourth transmitting module 1110 is configured to** transmit the identification information of the SL positioning server UE to at least one first UE. The first UE is a target UE, an SL positioning reference UE, or a UE with a known position. For example, the at least one UE includes a target UE and other UEs located within a peripheral range of the target UE. The other UEs located within the peripheral range of the target UE are referred to as SL positioning reference UEs, or referred to as candidate SL positioning reference UEs.

In some embodiments, the privacy verification information is stored in the first UE.

In some embodiments, the apparatus further includes a fourth receiving module. **The fourth receiving module is configured to** receive the privacy verification result transmitted by the first UE.

In some embodiments, a PC5 connection exists between the first UE and the fourth apparatus, and the fourth apparatus receives the privacy verification result transmitted by the first UE via the PC5 connection. Alternatively, no PC5 connection exists between the first UE and the fourth apparatus, and the fourth apparatus establishes a PC5 connection with the first UE and then receives the privacy verification result transmitted by the first UE via the PC5 connection.

In some embodiments, the fourth apparatus receives the privacy verification result from at least one first UE, wherein the privacy verification result of each first UE is used to indicate whether the SL positioning server UE is authorized to acquire the privacy data of the first UE.

In some embodiments, the apparatus further includes a first determining module. **The second determining module is configured to** determine whether to proceed with the ranging/SL positioning service based on the privacy verification result of the first UE.

In some embodiments, the first UE includes n first UEs, wherein n is a positive integer. The privacy verification results of the n first UEs are used for the fourth apparatus to determine whether to proceed with the ranging/SL positioning service. That is, **the second determining module is further configured to:** determine to transmit a ranging/SL positioning service request to the SL positioning server UE in the case where the privacy verification results of the n first UEs are all a first result, wherein the first result indicates that the SL positioning server UE is authorized to acquire the privacy data of the n first UEs; determine to transmit a ranging/SL positioning service rejection message to the SL positioning server UE in the case where the privacy verification results of the n first UEs are all a second result, wherein the second result indicates that the SL positioning server UE is not authorized to acquire the privacy data of the n first UEs; and determine a processing mode according to a privacy verification rule in the case where the privacy verification results of a part of the n first UEs are the first result.

In some embodiments, the processing mode includes at least one of: transmitting the ranging/SL positioning service request to the SL positioning server UE, transmitting the ranging/SL positioning service rejection message to the SL positioning server UE, or reselecting the SL positioning server UE.

In some embodiments, the privacy verification rule is provided by an application layer of the fourth apparatus, or the privacy verification rule is transmitted by the SL positioning server UE to the fourth apparatus. The processing mode and the privacy verification rule are similar to those illustrated in S440, and are not repeated herein. It should be noted that, in response to determining that privacy verification needs to be performed on the SL positioning server UE, a UE-only operation scenario is determined, and a ranging/SL positioning service request is not transmitted to the LMF in the processing mode. Furthermore, since the SL positioning server UE is determined based on the privacy verification result in the "first determination method" and the "third determination method", the SL positioning server UE is reselected in the case where the current SL positioning server UE is not authorized to acquire the privacy data of the first UE, and the privacy verification is reperformed on the new SL positioning server UE. The two aspects differ from the solution illustrated in S440.

In some embodiments, **the second determining module is configured to** transmit identification information of third UEs to the SL positioning server UE.

In some embodiments, the first UE whose privacy verification result is the first result is referred to as the third UE, that is, the n first UEs include m third UEs. The privacy verification results of the m third UEs are the first result. The privacy verification results of the m third UEs are the first results. m is a positive integer and m≤n. The ranging/SL positioning service request includes pieces of identification information of the m third UEs, and each of the m third UEs corresponds to one of the pieces of identification information. That is, the fourth apparatus selects the third UEs based on the privacy verification results of the first UEs, and acquires the identification information of the third UEs.

In some embodiments, the identification information of the third UE includes at least one of: user information of the third UE, or an application layer ID of the third UE.

In some embodiments, the identification information of each of the m third UEs is used for the SL positioning server UE to determine whether the each of the m third UEs participates in the ranging/SL positioning service; or the ranging/SL positioning service request further includes capability information of the m third UEs, and the capability information of each of the m third UEs and the identification information of the each of the m third UEs are used for the SL positioning server UE to determine whether the each of the m third UEs participates in the ranging/SL positioning service. A method for the SL positioning server UE to determine the third UEs participating in the ranging/SL positioning service has been illustrated in S440, and is not repeated herein.

It should be noted that, for the apparatus provided according to the embodiments described above, the division of the functional modules is merely exemplary. In practical applications, the functions may be assigned to different functional modules as needed; that is, the internal structure of the device may be divided into different functional modules to implement all or a part of the above functions.

With regard to the apparatus in the embodiments, the specific manner in which each module performs operations has been described in detail in the embodiments related to the method and will not be described in detail herein.

FIG. 17 is a schematic structural diagram of a terminal device according to some exemplary embodiments of the present disclosure. The terminal device 1300 may be configured to perform the method processes performed by the first UE and the second UE in the above embodiments. The terminal device 1300 includes: a processor 1301, a transceiver 1302, and a memory 1303. The processor 1301 may be configured to control transmission and/or reception. The transceiver 1302 may be configured to implement transmission and/or reception functions.

The processor 1301 includes one or more processing cores, and the processor 1301 executes various functional applications and performs information processing by running software programs and modules. The transceiver 1302 may include a receiver and a transmitter, which are practiced, for example, as the same wireless communication assembly that includes a wireless communication chip and a radio frequency antenna. The memory 1303 may be connected to the processor 1301 and the transceiver 1302. The memory 1303 may be configured to store one or more computer programs loaded and run by the processor, and the processor 1301 is configured to load and run the one or more computer programs to perform the processes in the above method embodiments. In addition, the memory 1303 may be implemented by any type or combination of volatile or non-volatile storage devices including, but not limited to: magnetic or optical disks, electrically erasable programmable read-only memories, erasable programmable read-only memories, static random access memories, read-only memories, magnetic memories, flash memories, and programmable read-only memories. For details that are not specified in the embodiments, reference may be made to the embodiments described above, and the details will not be repeated herein.

In some exemplary embodiments of the present disclosure, a computer-readable storage medium is further provided. The computer-readable storage medium stores at least one program. The at least one program, when loaded and run by a processor, causes the computer-readable storage medium to perform the method for link switching according to the above method embodiments. In some exemplary embodiments of the present disclosure, a chip is further provided. The chip includes programmable logic circuitry and/or one or more program instructions. The chip, when running, is caused to perform the method for privacy verification according to the above method embodiments. In some exemplary embodiments of the present disclosure, a computer program product is further provided. The computer program product, when loaded and run on a processor of a computer device, causes the computer device to perform the method for privacy verification described above. In some exemplary embodiments of the present disclosure, a computer program is further provided. The computer program includes one or more computer instructions. The one or more computer instructions, when loaded and executed by a processor of a computer device, cause the computer device to perform the method for privacy verification described above.

It should be understood that the "indication" mentioned in the embodiments of the present disclosure may be a direct indication, an indirect indication, or an indication of an association relationship. The term "and/or" as mentioned herein describes the association relationship between the associated objects and indicates that three relationships may be present. For example, A and/or B may indicate (A), (A and B), and (B). The symbol "/" generally indicates an "or" relationship between the associated objects. In addition, serial numbers of the processes described herein only illustrate an exemplary possible execution sequence of the processes. In some embodiments, the processes are executed out of the numbering sequence. For example, two processes with different serial numbers are executed simultaneously, or two processes with different serial numbers are executed in a reverse order to the illustrated sequence, which is not limited in the embodiments of the present disclosure.

Described above are merely exemplary embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A method for privacy verification, performed by a first user equipment (UE), the method comprising:
acquiring a privacy verification result of the first UE based on identification information of a sidelink (SL) positioning client UE and privacy verification information of the first UE, wherein the privacy verification result is used to indicate whether the SL positioning client UE is authorized to acquire privacy data of the first UE.

2. The method according to claim 1, wherein the identification information of the SL positioning client UE comprises at least one of: user information of the SL positioning client UE, or an application layer identifier of the SL positioning client UE.

3. The method according to claim 1 or 2, wherein the privacy verification information comprises at least one of: a first type used to indicate a type of the SL positioning client UE authorized to acquire the privacy data of the first UE, or first information used to indicate information of the SL positioning client UE authorized to acquire the privacy data of the first UE.

4. The method according to any one of claims 1 to 3, further comprising:
receiving the identification information of the SL positioning client UE from a second UE.

5. The method according to any one of claims 1 to 3, further comprising:
receiving the identification information of the SL positioning client UE from the SL positioning client UE.

6. The method according to any one of claims 1 to 5, further comprising:
transmitting the privacy verification result to a second UE.

7. The method according to any one of claims 1 to 6, wherein the first UE comprises n first UEs, wherein n is a positive integer;
wherein
a second UE determines to transmit a ranging/SL positioning service request to an SL positioning server UE in a case where privacy verification results of the n first UEs are all a first result, wherein the first result indicates that the SL positioning client UE is authorized to acquire the privacy data of the first UE;
a second UE determines to transmit a ranging/SL positioning service request to a location management function (LMF) in a case where privacy verification results of the n first UEs are all a first result;
a second UE determines to transmit a ranging/SL positioning service rejection message to the SL positioning client UE in a case where privacy verification results of the n first UEs are all a second result, wherein the second result indicates that the SL positioning client UE is not authorized to acquire the privacy data of the first UE; or
a second UE determines a processing mode according to a privacy verification rule in a case where privacy verification results of a part of the n first UEs are a first result.

8. The method according to claim 7, wherein the processing mode comprises at least one of: transmitting the ranging/SL positioning service request to the SL positioning server UE, transmitting the ranging/SL positioning service request to the LMF, or transmitting the ranging/SL positioning service rejection message to the SL positioning client UE.

9. The method according to claim 7 or 8, wherein the privacy verification rule is provided by an application layer of the second UE, or the privacy verification rule is transmitted by the SL positioning client UE to the second UE.

10. The method according to claim 7 or 8, wherein the n first UEs comprise m third UEs, wherein privacy verification results of the m third UEs are all the first result, m is a positive integer and m ≤ n, the ranging/SL positioning service request comprises pieces of identification information of the m third UEs, and each of the m third UEs corresponds to one of the pieces of identification information.

11. The method according to claim 10, wherein the identification information of the third UE comprises at least one of: user information of the third UE, or an application layer identifier of the third UE.

12. The method according to claim 10 or 11, wherein the identification information of each of the m third UEs is used for the SL positioning server UE or the LMF to determine whether the each of the m third UEs participates in a ranging/SL positioning service; or the ranging/SL positioning service request further comprises capability information of the m third UEs, wherein the capability information of each of the m third UEs and the identification information of the each of the m third UEs are used for the SL positioning server UE or the LMF to determine whether the each of the m third UEs participates in a ranging/SL positioning service.

13. A method for privacy verification, performed by a second user equipment (UE), the method comprising:
transmitting identification information of a sidelink (SL) positioning client UE to a first UE, wherein the first UE is configured to acquire a privacy verification result of the first UE based on the identification information of the SL positioning client UE and privacy verification information of the first UE, wherein the privacy verification result is used to indicate whether the SL positioning client UE is authorized to acquire privacy data of the first UE.

14. The method according to claim 13, wherein the identification information of the SL positioning client UE comprises at least one of: user information of the SL positioning client UE, or an application layer identifier of the SL positioning client UE.

15. The method according to claim 13 or 14, wherein the privacy verification information comprises at least one of: a first type used to indicate a type of the SL positioning client UE authorized to acquire the privacy data of the first UE, or first information used to indicate information of the SL positioning client UE authorized to acquire the privacy data of the first UE.

16. The method according to any one of claims 13 to 15, further comprising:
receiving the privacy verification result from the first UE.

17. The method according to any one of claims 13 to 16, wherein the first UE comprises n first UEs, wherein n is a positive integer; and the method further comprises at least one of:
determining to transmit a ranging/SL positioning service request to an SL positioning server UE in a case where privacy verification results of the n first UEs are all a first result, wherein the first result indicates that the SL positioning client UE is authorized to acquire the privacy data of the first UE;
determining to transmit a ranging/SL positioning service request to a location management function (LMF) in a case where privacy verification results of the n first UEs are all a first result;
determining to transmit a ranging/SL positioning service rejection message to the SL positioning client UE in a case where privacy verification results of the n first UEs are all a second result, wherein the second result indicates that the SL positioning client UE is not authorized to acquire the privacy data of the first UE; or
selecting a processing mode according to a privacy verification rule in a case where privacy verification results of a part of the n first UEs are a first result.

18. The method according to claim 17, wherein the processing mode comprises at least one of: transmitting the ranging/SL positioning service request to the SL positioning server UE, transmitting the ranging/SL positioning service request to the LMF, or transmitting the ranging/SL positioning service rejection message to the SL positioning client UE.

19. The method according to claim 17 or 18, wherein the privacy verification rule is provided by an application layer of the second UE, or the privacy verification rule is transmitted by the SL positioning client UE to the second UE.

20. The method according to claim 17 or 18, wherein the n first UEs comprise m third UEs, wherein privacy verification results of the m third UEs are all the first result, m is a positive integer and m ≤ n, and the ranging/SL positioning service request comprises identification information of the m third UEs.

21. The method according to claim 20, wherein the identification information of the third UE comprises at least one of: user information of the third UE, or an application layer identifier of the third UE.

22. The method according to claim 20 or 21, wherein the identification information of each of the m third UEs is used for the SL positioning server UE or the LMF to determine whether the each of the m third UEs participates in a ranging/SL positioning service; or the ranging/SL positioning service request further comprises capability information of the m third UEs, wherein the capability information of each of the m third UEs and the identification information of the each of the m third UEs are used for the SL positioning server UE or the LMF to determine whether the each of the m third UEs participates in a ranging/SL positioning service.

23. A method for privacy verification, performed by a first user equipment (UE), the method comprising:
acquiring a privacy verification result of the first UE based on identification information of a sidelink (SL) positioning server UE and privacy verification information of the first UE, wherein the privacy verification result is used to indicate whether the SL positioning server UE is authorized to acquire privacy data of the first UE.

24. The method according to claim 23, wherein the identification information of the SL positioning server UE comprises at least one of: user information of the SL positioning server UE, or an application layer identifier of the SL positioning server UE.

25. The method according to claim 23 or 24, wherein the privacy verification information comprises at least one of: a second type used to indicate a type of the SL positioning server UE authorized to acquire the privacy data of the first UE, or second information used to indicate information of the SL positioning server UE authorized to acquire the privacy data of the first UE.

26. The method according to any one of claims 23 to 25, further comprising:
receiving the identification information of the SL positioning server UE from a second UE.

27. The method according to any one of claims 23 to 25, further comprising:
receiving the identification information of the SL positioning server UE from the SL positioning server UE.

28. The method according to any one of claims 23 to 27, further comprising:
transmitting the privacy verification result to a second UE.

29. The method according to any one of claims 23 to 28, wherein the first UE comprises n first UEs, wherein n is a positive integer;
wherein
a second UE determines to transmit a ranging/SL positioning service request to the SL positioning server UE in a case where privacy verification results of the n first UEs are all a first result, wherein the first result indicates that the SL positioning server UE is authorized to acquire the privacy data of the first UE;
a second UE determines to transmit a ranging/SL positioning service rejection message to an SL positioning client UE in a case where privacy verification results of the n first UEs are all a second result, wherein the second result indicates that the SL positioning server UE is not authorized to acquire the privacy data of the first UE;
a second UE determines to reselect an SL positioning server UE in the case where privacy verification results of the n first UEs are all a second result; or
a second UE determines a processing mode according to a privacy verification rule in a case where privacy verification results of a part of the n first UEs are a first result.

30. The method according to claim 29, wherein the processing mode comprises at least one of: transmitting the ranging/SL positioning service request to the SL positioning server UE, transmitting the ranging/SL positioning service rejection message to the SL positioning client UE, or reselecting the SL positioning server UE.

31. The method according to claim 29 or 30, wherein the privacy verification rule is provided by an application layer of the second UE, or the privacy verification rule is transmitted by the SL positioning client UE to the second UE.

32. The method according to claim 29 or 30, wherein the n first UEs comprise m third UEs, wherein privacy verification results of the m third UEs are all the first result, m is a positive integer and m ≤ n, the ranging/SL positioning service request comprises pieces of identification information of the m third UEs, and each of the m third UEs corresponds to one of the pieces of identification information.

33. The method according to claim 32, wherein the identification information of the third UE comprises at least one of: user information of the third UE, or an application layer identifier of the third UE.

34. A method for privacy verification, performed by a second user equipment (UE), the method comprising:
transmitting identification information of a sidelink (SL) positioning server UE to a first UE, wherein the first UE is configured to acquire a privacy verification result of the first UE based on the identification information of the SL positioning server UE and privacy verification information of the first UE, wherein the privacy verification result is used to indicate whether the SL positioning server UE is authorized to acquire privacy data of the first UE.

35. The method according to claim 34, wherein the identification information of the SL positioning server UE comprises at least one of: user information of the SL positioning server UE; or an application layer identifier of the SL positioning server UE.

36. The method according to claim 34 or 35, wherein the privacy verification information comprises at least one of: a second type used to indicate a type of the SL positioning server UE authorized to acquire the privacy data of the first UE, or second information used to indicate information of the SL positioning server UE authorized to acquire the privacy data of the first UE.

37. The method according to any one of claims 34 to 36, further comprising:
receiving the privacy verification result from the first UE.

38. The method according to any one of claims 34 to 37, wherein the first UE comprises n first UEs, wherein n is a positive integer; and the method further comprises at least one of:
determining to transmit a ranging/SL positioning service request to the SL positioning server UE in a case where privacy verification results of the n first UEs are all a first result, wherein the first result indicates that the SL positioning server UE is authorized to acquire the privacy data of the first UE;
transmitting a ranging/SL positioning service rejection message to an SL positioning client UE in a case where privacy verification results of the n first UEs are all a second result, wherein the second result indicates that the SL positioning server UE is not authorized to acquire the privacy data of the first UE;
determining to reselect an SL positioning server UE in the case where privacy verification results of the n first UEs are all a second result; or
selecting a processing mode according to a privacy verification rule in a case where privacy verification results of a part of the n first UEs are a first result.

39. The method according to claim 38, wherein the processing mode comprises at least one of: transmitting the ranging/SL positioning service request to the SL positioning server UE, transmitting the ranging/SL positioning service rejection message to the SL positioning client UE, or reselecting the SL positioning server UE.

40. The method according to claim 38 or 39, wherein the privacy verification rule is provided by an application layer of the second UE, or the privacy verification rule is transmitted by the SL positioning client UE to the second UE.

41. The method according to claim 38 or 39, wherein the n first UEs comprise m third UEs, wherein privacy verification results of the m third UEs are all the first result, m is a positive integer and m ≤ n, the ranging/SL positioning service request comprises pieces of identification information of the m third UEs, and each of the m third UEs corresponds to one of the pieces of identification information.

42. The method according to claim 41, wherein the identification information of the third UE comprises at least one of: user information of the third UE, or an application layer identifier of the third UE.

43. The method according to claim 41 or 42, wherein the identification information of each of the m third UEs is used for the SL positioning server UE to determine whether the each of the m third UEs participates in a ranging/SL positioning service; or the ranging/SL positioning service request further comprises capability information of the m third UEs, wherein the capability information of each of the m third UEs and the identification information of the each of the m third UEs are used for the SL positioning server UE to determine whether the each of the m third UEs participates in a ranging/SL positioning service.

44. A first apparatus, comprising: a first verifying module, configured to acquire a privacy verification result of a first user equipment (UE) based on identification information of a sidelink (SL) positioning client UE and privacy verification information of the first UE, wherein the privacy verification result is used to indicate whether the SL positioning client UE is authorized to acquire privacy data of the first UE.

45. A second apparatus, comprising: a second transmitting module, configured to transmit identification information of a sidelink (SL) positioning client user equipment (UE) to a first UE, wherein the first UE is configured to acquire a privacy verification result of the first UE based on the identification information of the SL positioning client UE and privacy verification information of the first UE, wherein the privacy verification result is used to indicate whether the SL positioning client UE is authorized to acquire privacy data of the first UE.

46. A third apparatus, comprising: a second verifying module, configured to acquire a privacy verification result of a first user equipment (UE) based on identification information of a sidelink (SL) positioning server UE and privacy verification information of the first UE, wherein the privacy verification result is used to indicate whether the SL positioning server UE is authorized to acquire privacy data of the first UE.

47. A fourth apparatus, comprising: a fourth transmitting module, configured to transmit identification information of a sidelink (SL) positioning server user equipment (UE) to a first UE, wherein the first UE is configured to acquire a privacy verification result of the first UE based on the identification information of the SL positioning server UE and privacy verification information of the first UE, wherein the privacy verification result is used to indicate whether the SL positioning server UE is authorized to acquire privacy data of the first UE.

48. A terminal device, comprising: a processor; a transceiver connected to the processor; and a memory configured to store one or more executable instructions of the processor, wherein the processor is configured to load and execute the one or more executable instructions to perform the method for privacy verification as defined in any one of claims 1 to 43.
